# EUROPÄISCHE PATENTSCHRIFT

(11) **EP 2 050 323 B1**
(45) Veröffentlichungstag und Bekanntmachung des Hinweises auf die Patenterteilung: **28.07.2010**
(21) Anmeldenummer: 08018257.9
(22) Anmeldetag: 17.10.2008
(51) Int. Cl.: A01B 3/46

(54) **Aufsatteldrehpflug**
Semi-mounted reversible plough
Charrue réversible semi-portée

(30) Priorität: 19.10.2007 DE 102007050144
(43) Veröffentlichungstag der Anmeldung: 22.04.2009
(73) Patentinhaber: Gaßner, Lieselotte, 85653 Aying-Göggenhofen (DE)
(72) Erfinder:
(74) Vertreter: Tiesmeyer, Johannes

(56) Entgegenhaltungen:
- DE-A1- 2 310 580
- FR-A- 2 627 932
- GB-A- 2 240 246

## Beschreibung

Die Erfindung betrifft einen Aufsatteldrehpflug mit einem zur Befestigung an der Hubvorrichtung eines Zugfahrzeugs geeigneten, einen Drehantrieb für den Wendevorgang eines eine Mehrzahl von Pflugkörperpaaren tragenden Pflugrahmens aufweisenden Pflugkopf, wobei der Pflugrahmen um eine im wesentlichen horizontal und in Arbeitsrichtung des Pfluges verlaufende, durch ein Drehlager am Pflugkopf definierte Wendeachse zwischen zwei fixierbaren Arbeitsstellungen umstellbar ist und sein hinteres Ende von einem wenigsten ein Stützrad aufweisenden Aufsattelfahrwerk abgestützt ist, das mit einer Drehlagerung für den Pflugrahmen versehen ist, das über einen mit dem Pflugkopf verbundenen Stabilisator am Kippen gehindert ist und eine Hubvorrichtung zum Heben und Senken des Pflugrahmens aufweist.

Bei bekannten Aufsatteldrehpflügen siehe z.B. GB 2 240 246 ist die Hubvorrichtung am Aufsattelfahrwerk geeignet, im Zusammenwirken mit einem am Zugfahrzeug vorgesehenen Kraftheber am Ende der Furche den Pflugrahmen so weit anzuheben, daß die Pflugkörper aus dem Boden gehoben sind und der Pflugrahmen für den Wendevorgang bereit ist. Nach dem Wendevorgang wird der Pflugrahmen durch die Hubvorrichtung wieder abgesenkt. Beim Wendevorgang wird der Pflugrahmen über das Aufsattelfahrwerk hinweggehoben. Hierzu ist der Pflugrahmen über einen Dreharm mit der Drehlagerung am Aufsattelfahrwerk verbunden. Der Radius des vom Pflugrahmen beim Wechsel der Arbeitsstellung beschriebenen Wendekreises wird von der Länge des Dreharms bestimmt. Bei bekannten Aufsatteldrehpflügen wird durch die Hubvorrichtung der Pflugrahmen zusammen mit der ihm am Aufsattelfahrwerk zugeordneten Drehlagerung angehoben und abgesenkt. Der Wendevorgang besteht aus drei Schritten. Zunächst hebt die Hubvorrichtung Drehlagerung und Pflugrahmen an, dann wird der Pflugrahmen um die Achse der angehobenen Drehlagerung gedreht und abschließend werden Drehlagerung und Pflugrahmen wieder abgesenkt. Je länger der Dreharm zwischen Drehlagerung und Pflugrahmen ist, desto höher wird der Pflugrahmen während des Wendevorgangs angehoben bzw. desto höher liegt der Pflugrahmen beim Durchwandern des Scheitelpunkts des Wendekreises, was zugleich die Transportstellung des Aufsatteldrehpflugs darstellt.

Bei Drehpflügen mit einer größeren Anzahl von Pflugkörperpaaren ragt der Pflugrahmen nach hinten über das Aufsattelfahrwerk hinaus und trägt dort ebenfalls wenigstens ein Pflugkörperpaar. In der Arbeitsposition liegt der Pflugrahmen relativ tief, etwa im Bereich der Radachse des Aufsattelfahrwerks. Die Länge des Dreharms ist deshalb so bemessen, daß bei in die Arbeitsposition abgesenktem Pflugrahmen eine Kollision von Stützrad und Pflugrahmen vermieden wird und andererseits der horizontale Abstand des Pflugrahmenschwerpunkts von der ihm zugewandten Begrenzung der Aufstandsfläche des aus dem Zugfahrzeug und dem mit diesem verbundenen Aufsatteldrehpflug bestehenden Systems möglichst gering ist, um die Gefahr des Kippens des Systems bei ausgehobenem und insbesondere bei am Hang schräg stehendem Pflug zu vermeiden. Je länger der Dreharm ist und je weiter damit der Pflugrahmenschwerpunkt von der Drehlagerung entfernt ist, desto größer ist das Drehmoment, das für die Einleitung des Wendevorgangs aufzuwenden ist und desto stärker muß der Drehantrieb am Pflugkopf dimensioniert sein.

Der Erfindung liegt die Aufgabe zugrunde, ganz allgemein die Stabilität eines Aufsatteldrehpflugs zu verbessern, insbesondere beim ausgehobenen Pflugrahmen den horizontalen Abstand des Pflugrahmenschwerpunkts von der Drehlagerung zu verringern, und damit sowohl die Kippgefahr als auch die erforderliche Dimensionierung des Drehantriebs zu reduzieren. Außerdem wird angestrebt, in der Transportstellung des Pflugrahmens eine möglichst tiefe Schwerpunktsposition zu verwirklichen.

Die Lösung dieser Aufgabe besteht erfindungsgemäß darin, daß das wenigstens eine Stützrad an einem Fahrwerksgrundkörper in einer insbesondere festen Position gelagert ist, daß die Drehlagerung in einer insbesondere festen Position am Fahrwerksgrundkörper positioniert ist, daß an der Drehlagerung wenigstens ein Verbindungsglied zum Pflugrahmen gelagert ist, das über ein Gelenk mit dem Pflugrahmen derart verbunden ist, daß der Schwenkwinkel zwischen Pflugrahmen und Verbindungsglied durch einen Anschlag begrenzt ist, daß dem Verbindungsglied ein am Aufsattelfahrwerk angebrachter Antrieb derart zugeordnet ist, daß ausgehend von einer sich vom Grundkörper aus seitlich erstreckenden, einer der fixierbaren Arbeitsstellungen des Pflugrahmens zugeordneten Grundstellung bei fixiertem Pflugrahmen das Verbindungsglied gegenüber dem Grundkörper unter Anhebung des Gelenks in Richtung auf eine etwa vertikale Stellung verschwenkbar ist und das Gelenk durch den Anschlag blockiert ist, wenn der Pflugrahmen die für den Wendevorgang erforderliche Bodenfreiheit erreicht hat, und daß eine Steuerung geeignet ist, beim Erreichen der blockierten Stellung des Gelenks die Fixierung des Pflugrahmens gegenüber dem Pflugkopf zu lösen und den Drehantrieb einzuschalten.

Ausgehend von einer der beiden Arbeitsstellungen des Pflugrahmens wird durch diese Konstruktion durch Betätigung des Antriebs am Aufsattelfahrwerk zunächst der an einer Drehung um die Wendeachse gehinderte Pflugrahmen parallel zu sich selbst angehoben, wobei sich der Winkel zwischen dem Pflugrahmen und dem Verbindungsglied verringert, bis schließlich der der jeweiligen Wenderichtung des Pflugrahmens zugeordnete Anschlag eine weitere Zerkleinerung des Winkels zwischen dem Pflugrahmen und dem Verbindungsglied und damit eine weitere Aufwärtsbewegung des Pflugrahmens parallel zu sich selbst verhindert. In dieser Position ist der Pflugrahmen so weit angehoben, daß die für die Wendebewegung um die Wendeachse erforderliche Bodenfreiheit erreicht ist. Es kann nun durch eine geeignete Steuerung die Fixierung des Pflugrahmens gelöst und mit Hilfe des Drehantriebs die Wendebewegung um die Wendeachse begonnen werden. Dabei hat sich - bevor der Anschlag greift und die Wendebewegung des Pflugrahmens um seine Wendeachse einsetzt - der Schwerpunkt des Pflugrahmens deutlich angehoben, aber auch sein horizontaler Abstand von der Achse der Drehlagerung verringert, so daß einerseits der Pflugrahmen ohne Kollisionsgefahr über das Aufsattelfahrwerk hinweggeschwenkt werden kann und andererseits das durch den Drehantrieb aufzuwendende Drehmoment reduziert wird, der somit kleiner dimensioniert werden kann. Zugleich ermöglicht es diese Konstruktion, beim Aufsattelfahrwerk Räder mit größerem Durchmesser einzusetzen. Außerdem kann der Drehantrieb am Pflugkopf durch den Antrieb unterstützt werden, bis der Pflugrahmen den Scheitelpunkt seiner Wendebewegung überschritten hat und durch sein eigenes Gewicht in die neue Arbeitsstellung absinkt, wobei der Antrieb die Dämpfung übernimmt. In der Praxis konnte der Schwerpunkt um etwa 30 cm angehoben werden. Das hat die vorteilhafte Folge, daß die Drehlagerung am Aufsattelfahrwerk relativ tief angeordnet werden kann, was in der Arbeitsstellung den Schwerpunkt des Pflugrahmens tiefer legt als beim Stand der Technik, wodurch die Kippgefahr für den Pflug verringert wird. Außerdem verhindert der Anschlag, daß vor dem Überschreiten des Scheitelpunkts der Pflugrahmen entgegen der Wenderichtung zurückkippt

Vorzugsweise wirken der Antrieb am Aufsattelfahrwerk und der Kraftheber bzw. die hydraulische Hubvorrichtung des Zugfahrzeuges beim Heben des Pflugkopfes zusammen.

Nach einer bevorzugten Ausführungsform besteht der Antrieb aus zwei Hydraulikzylindern, die jeweils einer der beiden Wenderichtungen des Pflugrahmens zugeordnet sind.

Dabei ist vorzugsweise jedem Hydraulikzylinder eine als Winkelhebel gestaltete Pendelkonsole zugeordnet, deren langer Schenkel mit seinem oberen Ende um eine zur Achse der Drehlagerung parallele Achse beweglich an jeweils einer der Seiten des Grundkörpers gelagert ist und am unteren Ende einen seitlich vom Grundkörper vorspringenden kurzen Schenkel aufweist, an dem ein Ende des Hydraulikzylinders angeschlossen ist, wobei der Druck des Hydraulikzylinders durch Anlage der Pendelkonsole am Grundkörper abgestützt ist. Dadurch kann der der jeweiligen Wenderichtung als Antrieb zugeordnete Hydraulikzylinder nach dem Ausheben des Pflugrahmens, wenn der Drehantrieb am Pflugkopf den Pflugrahmen über den Scheitelpunkt bewegt und der Pflugrahmen schließlich die neue Arbeitsstellung einnimmt, durch Hochschwenken der Pendelkonsole ohne Widerstand dieser Bewegung folgen. Bei der gegenläufigen Bewegung wird zunächst die Pendelkonsole bis zur Anlage am Grundkörper in eine stützende Position zurückgeführt und ermöglicht dadurch dann die Dämpfungsfunktion des zugeordneten Hydraulikzylinders.

Gemäß einer ersten Ausführungsform der Erfindung besteht das Verbindungsglied aus einem in der Drehlagerung gelagerten Schwenkarm, der zwei in Bezug auf seine vertikale Mittelstellung symmetrische, den beiden Arbeitsstellungen des Pflugrahmens zugeordnete Endstellungen aufweist und über ein an ihm angeordnetes, auf einer Kreisbahn um das Drehlager bewegliches Gelenk mit dem Pflugrahmen verbunden ist, und daß am Schwenkarm beiderseits in Drehrichtung dem Pflugrahmen zugeordnete Anschläge zur jeweiligen Begrenzung des Schwenkwinkels angeordnet sind.

Vorzugsweise sind die Anschläge als seitliche Vorsprünge des Schwenkarms ausgebildet, wobei zweckmäßigerweise die Hydraulikzylinder des Antriebs jeweils mit einem der Anschläge verbunden sind.

Gemäß einer zweiten Ausführungsform der Erfindung wird das Verbindungsglied von einem Viergelenksystem gebildet, dessen Basis ein zweiarmiger Hebel ist, der mittig an der Drehlagerung gelagert ist und dessen beide Enden jeweils gelenkig über einen Lenker mit jeweils einer von zwei symmetrisch zur Wendeachse am Pflugrahmen angeordneten Lagerstellen verbunden sind. Damit wird im Vergleich zur ersten Ausführungsform erreicht, daß sich das Gelenk zwischen Verbindungsglied und Pflugrahmen unter den Pflugrahmen bewegen läßt, was den horizontalen Abstand zwischen Pflugrahmenschwerpunkt und Achse der Drehlagerung und damit das für das Umschwenken des Pflugrahmens aufzubringende Drehmoment reduziert. Zudem wird die Vertikalbewegung des Pflugrahmens, d.h. die maximale Höhe des Pflugschwerpunkts über dem Boden und damit die Kippgefahr weiter reduziert.

Vorzugsweise ist dabei im Bereich der Lagerstellen der Pflugrahmen mit jeweils einer mit dem seitlichen Rand der Lenker zusammenwirkenden Anschlagfläche versehen. Beim Anheben des an einer Drehung um die Wendeachse gehinderten Pflugrahmens verschwenken sich die Lenker in ihren Lagerstellen am Pflugrahmen. Der Winkel zwischen der seitlichen Randfläche des dem aktiven Hydraulikzylinder zugeordneten Lenkers und der Anschlagfläche an der Lagerstelle verringert sich dabei, bis nach einer vorgegebenen Aushubhöhe des Pflugrahmens die einander zugewandten Flächen am Lenker und auf der Seite des Pflugrahmens parallel zueinander verlaufen und an einander anliegen, was eine weitere Winkelbewegung zwischen Pflugrahmen und Lenker verhindert. Damit der Lenker weiter nach oben und dann über die durch die Achse der Drehlagerung am Aufsattelfahrwerk gelegte Vertikalebene hinweg bewegt werden kann, muß der Pflugrahmen zur Drehung um die Wendeachse freigegeben werden.

Bei einem Aufsatteldrehpflug mit einer Vorrichtung zum gemeinsamen Verstellen der Schnittbreite der Pflugkörper, wobei jedem Pflugkörperpaar ein gemeinsamer Träger zugeordnet ist und der Winkel zwischen der Schnittrichtung des Pflugkörpers und der Längsrichtung des Pflugrahmens für jedes Pflugkörperpaar dadurch verstellbar ist, daß jeder Träger um eine jedem Pflugkörperpaar zugeordnete Drehachse am Pflugrahmen verstellbar ist und zur gemeinsamen Verstellung aller Pflugkörper die Träger mit gleichem Abstand von der Drehachse gelenkig mit einem starren Stellglied verbunden sind, muß auch das sich in Arbeitsrichtung bewegende Aufsattelfahrwerk bei einer Schnittbreitenänderung seinen Winkel relativ zum Pflugrahmen ändern. Hierzu werden beispielsweise bei der zweiten Ausführungsform die zur Verbindung des Aufsattelfahrwerks mit dem Pflugrahmen vorgesehenen Lagerstellen nicht unmittelbar am Pflugrahmen vorgesehen, sondern befinden sich an einer durch das Stellglied in seiner Winkelstellung gegenüber dem Pflugrahmen veränderbaren Montagekonsole. Je nach Winkelstellung verändert sich bei einer solchen Konstruktion der Abstand zwischen dem Aufsattelfahrwerk und dem Schwerpunkt des Pflugrahmens, was die vorteilhaften Auswirkungen der Erfindung auf das beim Wendevorgang auszuübende Drehmoment und die Kippgefahr schmälern kann.

Es besteht deshalb eine weitere vorteilhafte Ausgestaltung der Erfindung bei einem Pflug mit Schnittbreitenverstellung darin, daß im Bereich des Aufsattelfahrwerks der Pflugrahmen mit einer Montagekonsole zur Verbindung mit dem Aufsattelfahrwerk versehen ist, an der das wenigstens eine Verbindungsglied angeschlossen ist, wobei die Montagekonsole und ein in ihrem Bereich befindlicher, am Pflugrahmen gelagerter Träger, der einen sich in Bezug auf seine Drehachse radial und etwa in Längsrichtung des Pflugrahmens nach vom erstreckenden Lenkerarm aufweist, zwei einander parallel gegenübertiegende Glieder eines Gelenkparallelogramms bilden, dessen beide anderen, bei minimaler Schnittbreiteneinstellung schräg nach hinten verlaufenden und zueinander parallelen Glieder die Montagekonsole einerseits mit der Drehachse des Trägers und andererseits mit dem davon entfernten Ende des einen Teil des Trägers bildenden Lenkerarms verbinden, und daß der Abstand der Drehachse des Trägers von der parallelen Achse zwischen Pflugrahmen und Pflugkopf deutlich länger ist als der Abstand der dazu parallelen Achsen zwischen den beiden Enden des Stabilisators und dem Aufsattelfahrwerk bzw. dem Pflugkopf.

Wenn die Schnittbreite vergrößert wird, nimmt der Winkel zwischen dem Pflugrahmen und der Arbeitsrichtung des Pfluges zu, wobei sich die Träger der Pflugkörperpaare um ihre Drehachse am Pflugkörper verschwenken, damit die Schnittrichtung der Pflugkörper zu sich selbst parallel bleibt. Bei der Änderung der Schnittbreite wird aufgrund der Rahmenbewegung das Aufsattelfahrwerk quer zur Arbeitsrichtung des Pfluges verstellt, wobei der Stabilisator das Kippen des Aufsattelfahrwerks verhindert. Zwei einander diagonal gegenüberliegende Gelenkpunkte des Gelenkparallelogramms sind einerseits durch die jeweilige Position des Pflugrahmens, andererseits durch die jeweilige Position des Aufsattelfahrwerks bestimmt, nämlich durch die Position der Drehachse des Pflugkörperträgers und andererseits durch die Position des dieser Drehachse diagonal gegenüberliegenden Anschlußpunkts des die Montagekonsole mit dem freien Ende des Lenkerarms verbindenden Parallelogrammglieds.

Bei der Schnittbreitenverstellung verändert sich der Winkel zwischen Pflugrahmen und Pflugkopf und in gleichem Sinne der Winkel zwischen dem Stabilisator und dem Pflugkopf. Wegen des oben definierten Längenunterschieds des radialen Abstands der Drehachse des Trägers einerseits und des Gelenkpunkts zwischen Aufsattelfahrwerk und Stabilisator andererseits vom jeweiligen Anschlußpunkt am Pflugkopf, beschreibt bei der Schnittbreitenverstellung die Drehachse des Trägers einen Bogen mit größerem Radius als dem des Bogens, den der Gelenkpunkt zwischen dem Aufsattelfahrwerk und dem Stabilisator durchläuft, weshalb bei der Vergrößerung der Schnittbreite eine nach vom gerichtete Zugkraft auf die Montagekonsole ausgeübt wird, so daß sich das Parallelogramm verändert und sich die Montagekonsole weiter vom Pflugrahmen entfernt, so daß bei jeder Schnittbreitenverstellung die hinsichtlich der Schwerpunktsposition des Pflugrahmens optimale Lage zwischen Aufsattelfahrwerk und Pflugrahmen erhalten bleibt.

Die den beiden Wenderichtungen des Pflugrahmens zugeordneten Anschläge zwischen Verbindungsglied und Pflugrahmen sind vorzugsweise einstellbar ausgebildet, um die Übergangsposition zwischen Hubbewegung und Schwenkbewegung des Pflugrahmens wunschgemäß variieren zu können.

Der der vorliegenden Erfindung zugrunde liegende Gedanke, die vom Pflugrahmen beschriebene Bewegung zwischen den beiden Arbeitsstellungen unter Anwendung eines Verbindungsglieds zwischen Drehlager und Pflugrahmen aufzuteilen in eine den Pflugrahmen parallel zu sich selbst anhebende und dabei zugleich den horizontalen Abstand zwischen Pflugrahmenschwerpunkt und Drehlagerachse verringernde Bewegungsphase bzw. eine den Pflugrahmen parallel zu sich selbst absenkende und dabei zugleich den horizontalen Abstand zwischen Pflugrahmenschwerpunkt und Drehlagerachse wieder vergrößernde Bewegungsphase und eine diese beiden Bewegungsphasen miteinander verbindende dritte Bewegungsphase, in der der Pflugrahmen sich um 180°verschwenkt und seinen Schwerpunkt dabei zugleich in horizontaler Richtung von der einen Seite der Drehlagerachse auf deren andere Seite verlagert, hat die vorteilhafte Folge, daß die Drehlagerung des Verbindungsglieds am Aufsattelfahrwerk entsprechend der Vertikalbewegung des Pflugrahmens in der ersten bzw. zweiten Bewegungsphase tiefer gelegt werden kann und die Kippgefahr bei nach oben verlagertem Pflugrahmen und das zum Umschwenken des Pflugrahmens aufzuwendende Drehmoment reduziert wird. Die Erfindung wird zwar nachfolgend am Beispiel eines Aufsattelfahrwerks näher erläutert, doch kann das Konstruktionsprinzip in analoger Weise und damit auch mit den gleichen Vorteilen auf die am Pflugkopf vorgesehene Drehvorrichtung angewandt werden.

Anhand der nun folgenden Beschreibung der in der Zeichnung dargestellten Ausführungsformen der Erfindung wird diese näher erläutert.

In der Zeichnung zeigt
- Fig. 1: eine Ansicht in etwa in Richtung des Pfeils R in Fig. 3 auf einen erfindungsge- mäßen Aufsatteldrehpflug in seiner die Scholle nach rechts wendenden Ar- beitsstellung,
- Fig. 2: eine Seitenansicht des in Fig. 1 gezeigten Aufsatteldrehpflugs,
- Fig. 3: eine Draufsicht auf den in den Figuren 1 und 2 gezeigten Aufsatteldrehpflug,
- Fig. 4: einen Schnitt nach der Linie IV - IV in Fig. 3,
- Fig. 5: eine Vergrößerung des in Fig. 4 vom Kreis V umschlossenen Details,
- Fig. 6: eine der Fig. 1 ähnliche Ansicht des erfindungsgemäßen Aufsatteldrehpflugs, nachdem der Pflugrahmen soweit parallel zu sich selbst angehoben ist, daß die Pflugkörper sich oberhalb der Bodenfläche befinden,
- Fig. 7: eine der Fig. 4 ähnliche Schnittansicht entsprechend der in Fig. 6 gezeigten Position des Aufsatteldrehpflugs,
- Fig. 8: eine Vergrößerung des in Fig. 7 vom Kreis VIII umschlossenen Details,
- Fig. 9: eine den Figuren 1 und 6 ähnliche Ansicht des Aufsatteldrehpflugs, der soweit parallel zu sich selbst angehoben ist, daß die Pflugkörper sich mit Abstand oberhalb der Bodenfläche befinden,
- Fig.10: eine Draufsicht auf den in Fig. 9 gezeigten Aufsatteldrehpflug
- Fig. 11: eine den Figuren 4 und 7 ähnliche Schnittansicht entsprechend der in Fig. 9 gezeigten Position des Aufsatfeldrehpflugs,
- Fig. 12: eine Vergrößerung des in Fig. 11 vom Kreis XII umschlossenen Details,
- Fig. 13: eine den Figuren 1, 6 und 9 ähnliche Ansicht des erfindungsgemäßen Aufsat- teldrehpflugs, nachdem der Pflugrahmen gegenüber der in Fig. 9 gezeigten Position weiter angehoben und zugleich in eine schräge Position verschwenkt ist,
- Fig. 14: eine Seitenansicht des in Fig. 13 gezeigten Aufsatteldrehpflugs,
- Fig. 15: eine Draufsicht auf den in den Figuren 13 und 14 gezeigten Aufsatteldreh- pflug,
- Fig. 16: einen Schnitt nach der Linie XVI - XVI in Fig. 14,
- Fig. 17: eine Vergrößerung des in Fig. 16 vom Kreis XVII umschlossenen Details,
- Fig. 18: eine den Figuren 4, 7 und 11 ähnliche Schnittansicht des erfindungsgemäßen Aufsatteldrehpflugs, nachdem der Pflugrahmen gegenüber der in Fig. 13 ge- zeigten Position weiter angehoben und zugleich in eine der Transportstellung entsprechende Position verschwenkt wurde, in der sich die Schare eines je- den Pflugscharpaars in horizontaler Richtung gegenüberliegen,
- Fig. 19: eine schematische Ansicht in Richtung des Pfeils R in Fig. 1, in der die Pflug- positionen nach den Figuren 1, 6, 9, 13 und 18 einander überdecken, jedoch zur besseren Übersicht ohne Pflugkörper und Hydraulikzylinder,
- Fig. 20: eine der Fig. 1 ähnliche Ansicht einer zweiten Ausführungsform des erfin- dungsgemäßen Aufsatteldrehpflugs,
- Fig. 21 1: eine Seitenansicht des in Fig. 20 gezeigten Aufsatteldrehpflugs,
- Fig. 22: eine Draufsicht auf den in den Figuren 20 und 21 gezeigten Aufsatteldreh- pflug,
- Fig. 23: einen Schnitt nach der Linie XXIII - XXIII in Fig. 21,
- Fig. 24: eine Vergrößerung des in Fig. 23 vom Kreis XXIV umschlossenen Details,
- Fig. 25: eine perspektivische Ansicht des in Fig. 23 gezeigten Abschnitts,
- Fig. 26: eine perspektivische Ansicht des in Fig. 24 gezeigten Details,
- Fig. 27: eine der Fig. 23 ähnliche Schnittansicht bei einer der Fig. 6 entsprechenden Pflugposition der zweiten Ausführungsform,
- Fig. 28: eine Vergrößerung des in Fig. 27 vom Kreis XXVIII umschlossenen Details,
- Fig. 29: eine Fig. 9 entsprechende Ansicht der zweiten Ausführungsform,
- Fig. 30: eine Draufsicht auf den in Fig. 29 gezeigten Aufsatteldrehpflug,
- Fig. 31: eine der Fig. 11 ähnliche Schnittansicht zu dem in Fig. 29 gezeigten Aufsat- teldrehpflug,
- Fig. 32: eine Vergrößerung des in Fig. 31 vom Kreis XXXII umschlossenen Details,
- Fig. 33: eine Fig. 13 entsprechende Ansicht der zweiten Ausführungsform,
- Fig. 34: eine der Fig. 16 ähnliche Schnittansicht zu dem in Fig. 33 gezeigten Aufsat- teldrehpflug,
- Fig. 35: eine Vergrößerung des in Fig. 34 vom Kreis XXXV umschlossenen Details,
- Fig. 36: eine Ansicht von hinten auf den Aufsatteldrehpflug der zweiten Ausführungs- form in der Transportstellung ähnlich Fig. 18,
- Fig. 37: eine den Figuren 23, 27, 31 und 34 entsprechende Schnittansicht zu der in Fig. 3 gezeigten Pflugposition,
- Fig. 38: eine Vergrößerung des in Fig. 37 vom Kreis XXXVIII umschlossenen Details,
- Fig. 39: eine der Fig. 19 entsprechende schematische Ansicht, in der die Pflugpositio- nen nach den Figuren 23, 27, 31, 34 und 37 einander überdecken, jedoch zur besseren Übersicht ohne Pflugkörper und in den auf die Arbeitsstellung fol- genden Stellungen ohne Hydraulikzylinder,
- Fig. 40: eine Draufsicht auf einen erfindungsgemäßen Aufsatteldrehpflug in Arbeits- stellung, der mit einer Vorrichtung zur Verstellung der Schnittbreite versehen ist, die auf eine geringe Schnittbreite eingestellt ist,
- Fig. 41: eine der Fig. 40 ähnliche Draufsicht, wobei eine mittlere Schnittbreite einge- stellt ist,
- Fig. 42: eine den Figuren 40 und 41 ähnliche Draufsicht, wobei eine maximale Schnitt- breite eingestellt ist,
- Fig. 43: eine Rückansicht des Pfluges in der in Fig. 42 gezeigten Position,
- Fig. 44: eine Draufsicht auf den Pflug nach den Fig. 40 bis 42, wobei bei einer festen Position des Pflugkopfs die unterschiedlichen Stellungen des Pflugrahmens und des Aufsattelfahrwerks dargestellt sind,
- Fig. 45: den mit dem Aufsattelfahrwerk verbundenen Abschnitt des Pflugrahmens, wo- bei die Veränderung der Fahrwerksposition relativ zum Pflugrahmen bei den drei in Fig. 45 gezeigten Schnittbreiteneinstellungen dargestellt ist, und
- Fig.46: zum besseren Verständnis nur den Pflugrahmenabschnitt, den Pflugkörperträ- ger und die Konsole für den Anbau des Aufsattelfahrwerks zeigt.

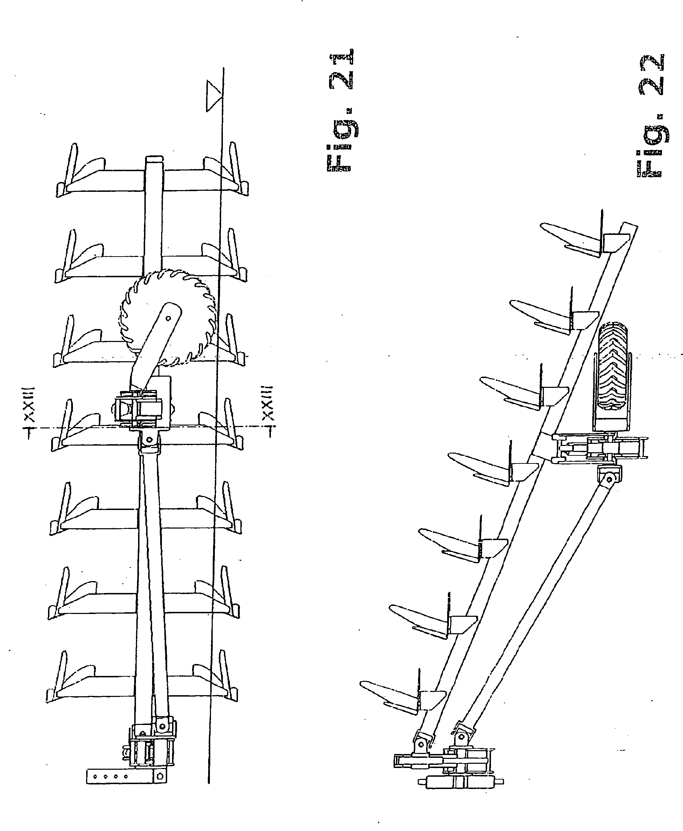

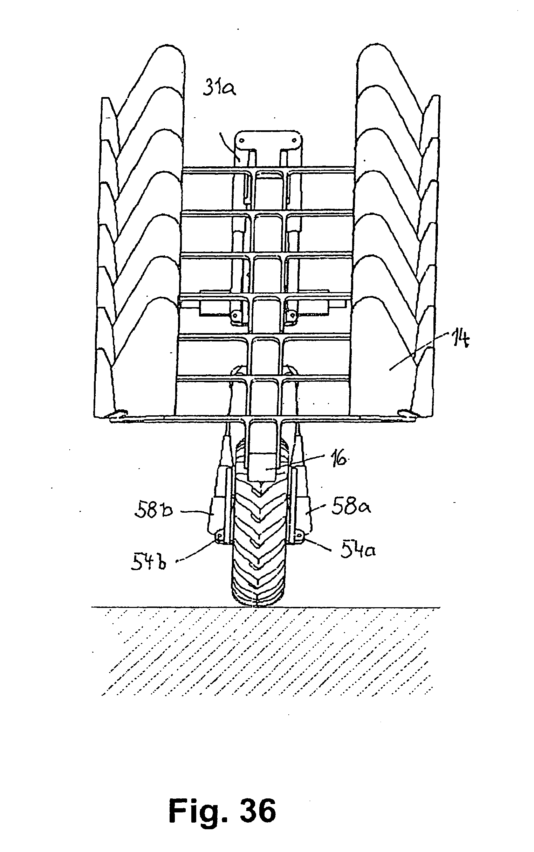

Ein insgesamt mit 10 bezeichneter Aufsatteldrehpflug besteht aus drei wesentlichen Baugruppen, einem mit einer hydraulischen Hubvorrichtung eines Zugfahrzeugs verbindbaren Pflugkopf 12, einem in bekannter Weise Pflugkörper 14 tragenden Pflugrahmen 16 und einem den hinteren Bereich des Pflugrahmens 16 abstützenden Aufsattelfahrwerk 18. Das tragende Element des Pflugrahmens ist ein Vierkanthohlprofil. Das Aufsattelfahrwerk 18 besitzt eine ebenfalls hydraulisch betätigbare, nachfolgend noch genauer beschriebene Vorrichtung, die geeignet ist, den Pflugrahmen im Zusammenwirken mit der hydraulischen Hubvorrichtung des Zugfahrzeugs soweit anzuheben, daß die in der Arbeitsposition des Pflugrahmens 16 in den Boden abgesenkten Pflugkörper 14 völlig aus ihrer in den Boden eindringenden Lage herausgehoben werden. Der Pflugrahmen 16 kann dann mittels eines Drehlagers 20 und eines Paars z.B. in den Figuren 22, 29, 33 und 36 gezeigter, hydraulisch betätigbarer Wendezylinder 31a und 31 b gegenüber dem Pflugkopf 12 um eine annähernd horizontal und in Arbeitsrichtung des Pfluges 10 verlaufende Wendeachse zwischen zwei in Bezug auf diese Achse um 180° versetzten, durch Anschläge definierten Arbeitsstellungen verschwenkt werden. Um diesen Wendevorgang zu ermöglichen, ist der Pflugrahmen 16 auch am Aufsattelfahrwerk 18 in einer später noch näher beschriebenen Weise drehbar gelagert. Der Pflugrahmen 16 trägt zwei Gruppen von Pflugkörpern 14 derart, daß die Pflugkörper 14 einander paarweise zugeordnet sind und die Pflugkörper der einen Gruppe in ihrer Arbeitsstellung die Scholle - bezogen auf die Arbeitsrichtung des Pfluges 10 - nach rechts umlegen, während die Pflugkörper der anderen Gruppe in ihrer Arbeitsstellung die Scholle nach links umlegen. Soweit in dieser Beschreibung die Begriffe horizontal und vertikal verwendet werden, geschieht dies unter der Voraussetzung, daß ungeachtet der Geländebeschaffenheit die vom Pflug befahrene Bodenoberfläche als horizontale Bezugsebene betrachtet wird.

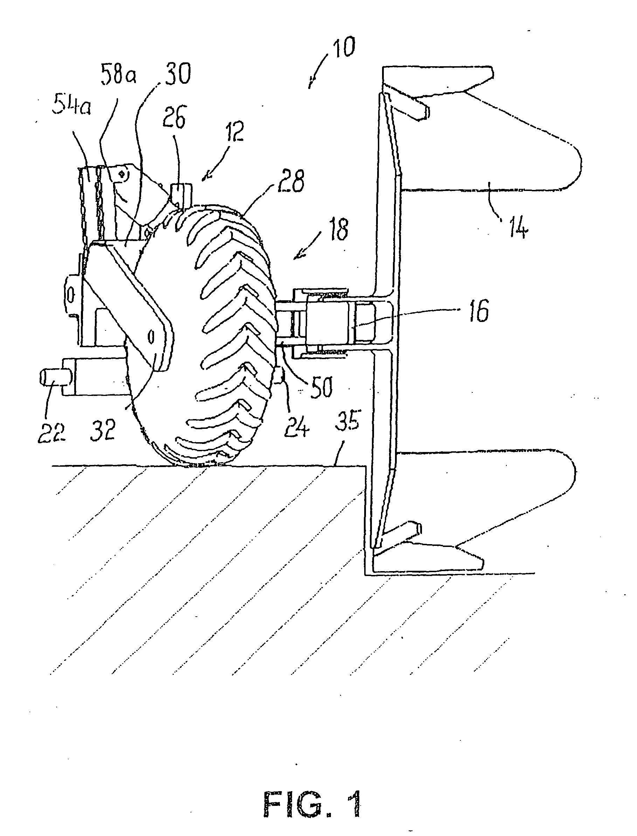

Der Pflugkopf 12 ist für den Anschluß an ein übliches Dreipunktgestänge mit zwei hydraulisch heb- und sinkbaren Unterlenkern und einem Oberlenker ausgestaltet und besitzt hierzu zwei eine gemeinsame, etwa horizontal und quer zur Arbeitsrichtung verlaufende Achse definierende, seitliche Zapfen 22 und 24 (Fig. 1) für die Unterlenker und eine Auswahl von Anschlußbohrungen 25 im oberen Bereich eines vertikalen Turms 26 für den gelenkigen Anschluß des Oberlenkers.

Das Aufsattelfahrwerk 18 ist mit wenigstens einem ständig in Bodenkontakt stehenden Stützrad 28 versehen, das von einem fest mit einem Grundkörper 30 des Aufsattelfahrwerks 18 verbundenem gabelförmigen Arm 32 getragen wird. Um ein Kippen des Aufsattelfahrwerks 18 zu verhindern, ist es durch einen Stabilisator 34 mit dem Pflugkopf 12 verbunden, der beiderseits kreuzgelenkartig mit einer quer zur Fahrtrichtung verlaufenden horizontalen Achse und einer senkrechten Achse angeschlossen ist.

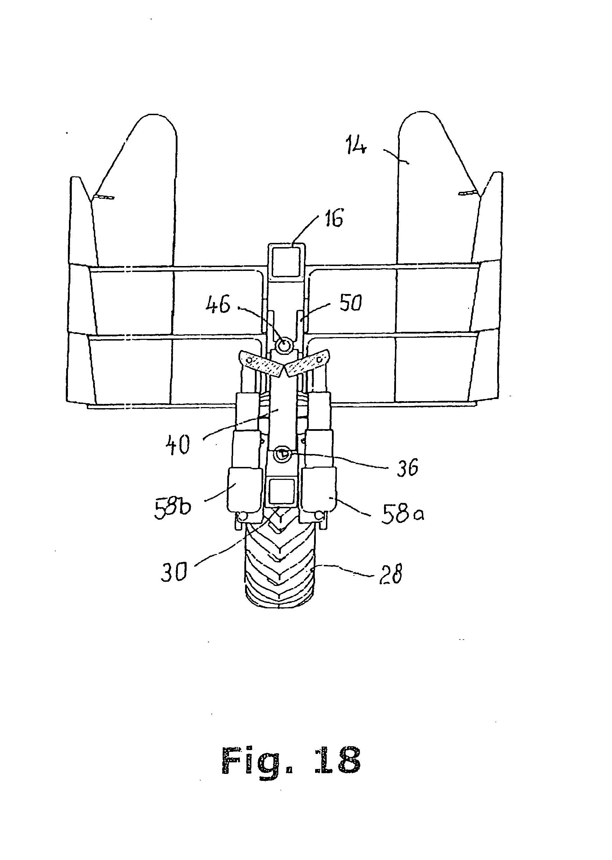

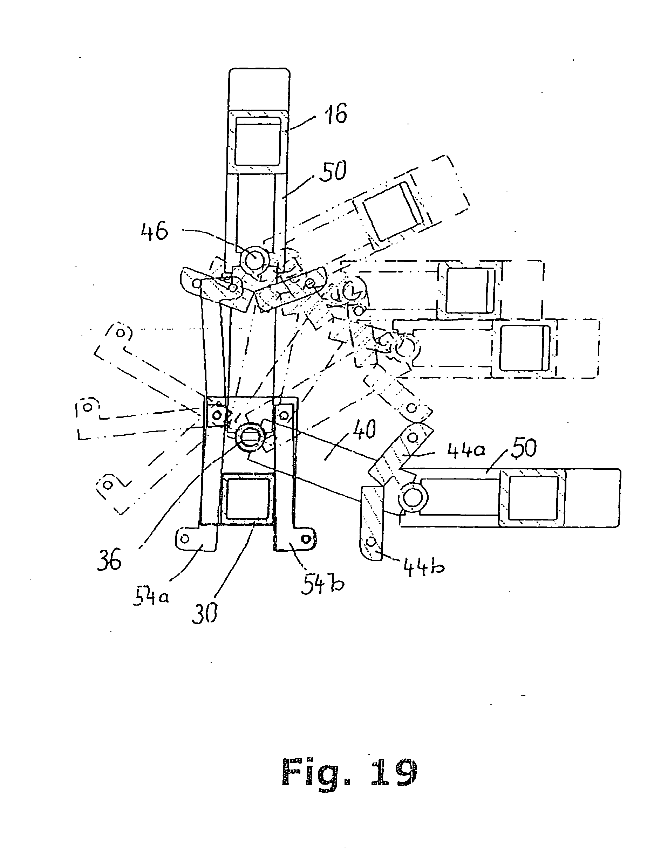

Die dem Wechsel der Arbeitsstellung dienende Schwenkbewegung des Pflugrahmens 16 relativ zum Aufsattelfahrwerk 18 erfolgt erfindungsgemäß mittels zweier einen Abstand voneinander aufweisender und zueinander paralleler Achsen, deren erste durch ein am Grundkörper 30 fest angeordnetes und somit stets den gleichen Abstand von der Bodenoberfläche 35 einhaltendes Drehlager 36 (Figuren 18 und 19) definiert wird. In diesem Drehlager 36 ist ein Ende eines Schwenkarms 40 gelagert, dessen anderes Ende über ein die zweite der genannten Achsen definierendes Gelenk 42 mit dem Pflugrahmen 16 verbunden ist. In Bezug auf eine die Achsen des Drehlagers 36 und des Gelenks 42 verbindende Radiallinie symmetrisch sind am Schwenkarm 40 zwei mit dem Pflugrahmen 16 zusammenwirkende Anschläge 44a und 44b zur Begrenzung des Drehwinkels des Gelenks 42 auf etwa 145° angeordnet. Der Schwenkarm 40 besteht aus zwei zu gemeinsamer Bewegung verbundenen und in Achsrichtung deckungsgleich mit Abstand voneinander angeordneten bandförmigen Armen 40a und 40b, deren jeder mit Anschlägen 44a und 44b versehen ist, die mit der dem Pflugkopf 12 zugewandten Vorderseite des Schwenkarms 40 bzw. dessen Rückseite z.B. durch Schweißen fest verbunden sind. Zwischen den beiden Armen 40a und 40b erstreckt sich ein Scharnierbolzen 46, der eine Gelenkhülse 48 durchquert, die an einer in Arbeitsstellung des Pflugrahmens 16 jeweils in Richtung auf das Aufsattelfahrwerk 18 vorspringenden Konsole 50 angebracht ist. Die Relativbewegung zwischen dem Schwenkarm 40 und der Konsole 50 um den Schamierbolzen 46 wird durch die Anlage eines der Anschläge 44a bzw. 44b an der Konsole 50 begrenzt. Um gegebenenfalls den Schwenkwinkel des Arms 40 aus der Arbeitsstellung des Pflugrahmens 16 bis zur Anlage eines der Anschläge 44a oder 44b an der Konsole 40 justieren zu können, können die Anschläge 44a und 44b einstellbar ausgebildet sein. Beispielsweise können in diesen Anschlägen 44a und 44b mit der Konsole 50 zusammenwirkende Stellschrauben vorgesehen sein.

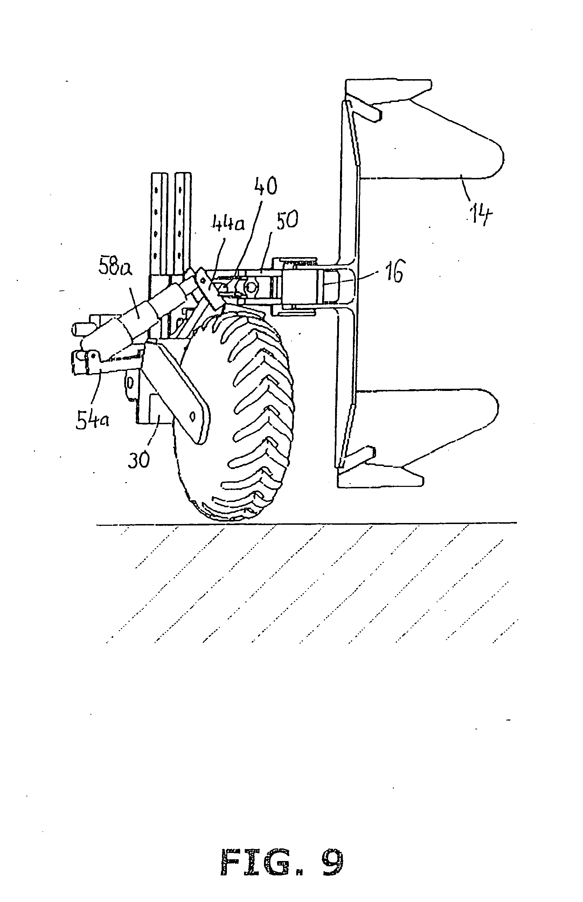

Am oberen Ende des Grundkörpers 30 sind auf beiden Seiten jeweils paarweise mit Abstand von einander zur Achse des Drehlagers 36 parallele Lager 52a bzw. 52b angeordnet, in denen jeweils über einen Lagerbolzen einander paarweise mit Abstand gegenüberliegende, im Querschnitt L-förmige Pendelstützen 54a bzw. 54b schwenkbar derart gelagert sind, daß ihr langer Schenkel an einer ihm zugeordneten seitlichen Anschlagfläche des Grundkörpers 30 anliegt und dabei der kurze Schenkel seitlich etwa horizontal nach außen vorspringt. Die kurzen Schenkel sind jeweils mit einem Lagerbolzen 56a bzw.56b zum gelenkigen Anschluß eines hydraulischen Stellzylinders 58a bzw. 58b versehen. Das andere Ende dieser Stellzylinder ist jeweils gelenkig an einem den Abstand zwischen den Anschlagpaaren 44a bzw. 44b überbrückenden Lagerbolzen 45a bzw. 45b angeschlossen. Die Anordnung ist dabei so getroffen, daß jeder Stellzylinder 58a und 58b zwischen den einander paarweise zugeordneten Anschlägen 44a bzw. 44b und den einander paarweise zugeordneten Pendelstützen 54a bzw. 54b und auch zwischen den beiden Armen des Schwenkarms 40 beweglich ist, wie dies z.B. deutlich in Fig. 9 zu erkennen ist.

In der Arbeitsstellung des Pflugrahmens 16 liegt auf der dem Pflugrahmen 16 zugewandten Seite des Grundkörpers 30 die Pendelstütze 54 am Grundkörper an, und der mit ihr verbundene Stellzylinder 58 weist seine kürzeste Länge auf und erstreckt sich in seitlicher Richtung zu dem ihm zugeordneten Anschlag 44. Wird dieser Stellzylinder 58 mit Druck beaufschlagt, während der Pflugrahmen 16 an einer Drehung im Drehlager 20 gehindert, also in diesem Sinne fixiert ist, stützt sich der Stellzylinder 58 über die Pendelstütze 54 am Grundkörper 30 ab und übt auf den Schwenkarm 40 ein Drehmoment um die Achse des Drehlagers 36 aus, das den Schwenkarm 40 anhebt, wobei sich der Schwenkarm 40 gegenüber dem Pflugrahmen 16 derart bewegt, daß sich je nach Drehrichtung einer der Anschläge 44a oder 44b dem Pflugrahmen 16 bzw. der an diesem angebrachten Konsole 50 nähert und, sobald er an der ihm jeweils zugeordneten Anschlagfläche 51 a bzw. 51 b der Konsole 50 anliegt, eine weitere Bewegung des Schwenkarms 40 blockiert, sofern der Pflugrahmen 16 aufgrund seiner Fixierung daran gehindert ist, durch Drehung im Drehlager 20 am Pflugkopf 12 der Bewegung des Schwenkarms 40 zu folgen.

Die Dimensionierung der beschriebenen Konstruktion ist derart, daß durch die Bewegung des Schwenkarms 40 bis zur sperrenden Funktion des Anschlags 44 der Pflugrahmen 16 parallel zu sich selbst, d. h. im Wesentlichen unter Beibehaltung seiner räumlichen Orientierung parallel zur Ausgangslage, soweit angehoben wird, daß in der erreichten Position die Pflugkörper 14 den Boden verlassen haben und eine ausreichende Bodenfreiheit für den Wendevorgang von der einen in die andere Arbeitsstellung besteht. Es ist eine Steuerung vorgesehen, die beim Erreichen dieser Position die Drehsperre des Pflugrahmens 16 aufhebt und damit die Fortsetzung der Schwenkbewegung des Schwenkarms 40 unter gleichzeitiger Drehung des Pflugrahmens 16 im Drehlager 20 ermöglicht. Diese Sperre kann beispielsweise durch den hydraulischen Wendezylinder am Pflugkopf 12 ausgeübt werden, der bei einigen die später erläuterte zweite Ausführungsform zeigenden Figuren zu sehen ist. Die Steuerung kann beispielsweise auf den Druckanstieg im Stellzylinder 58 beim Erreichen der Anschlagposition ansprechen.

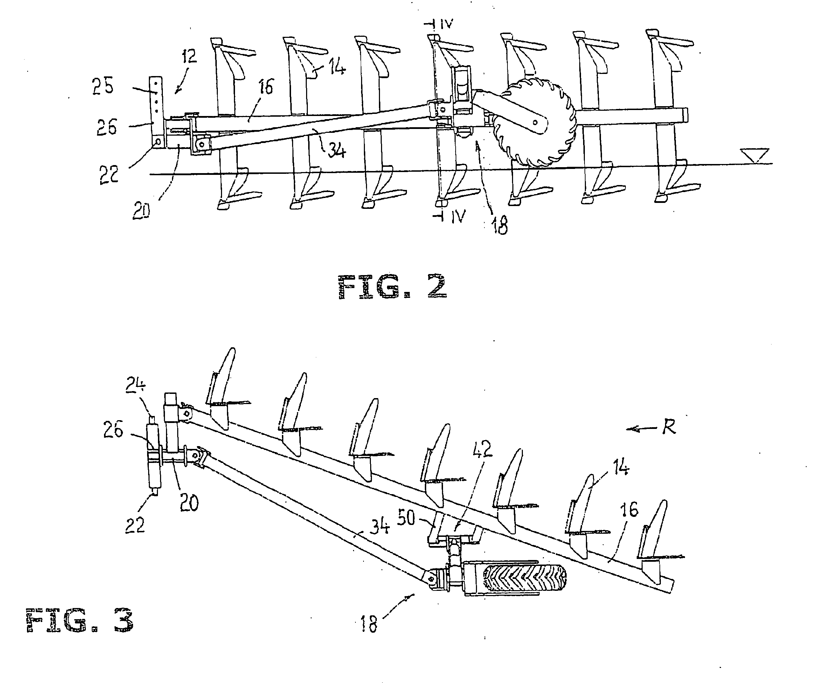

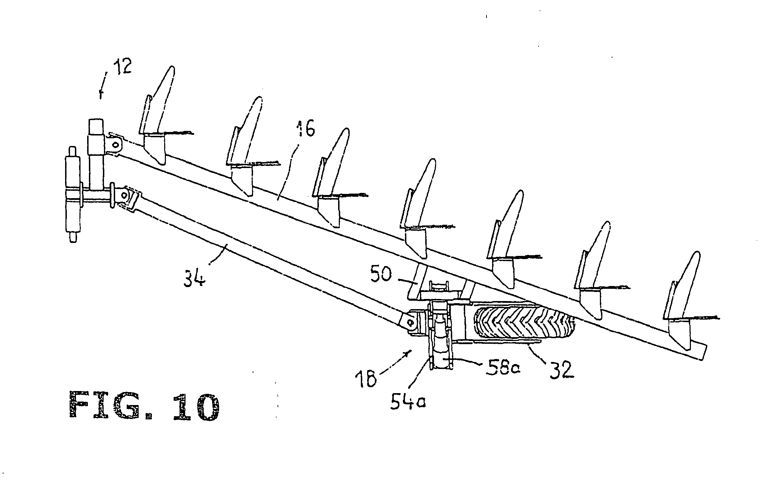

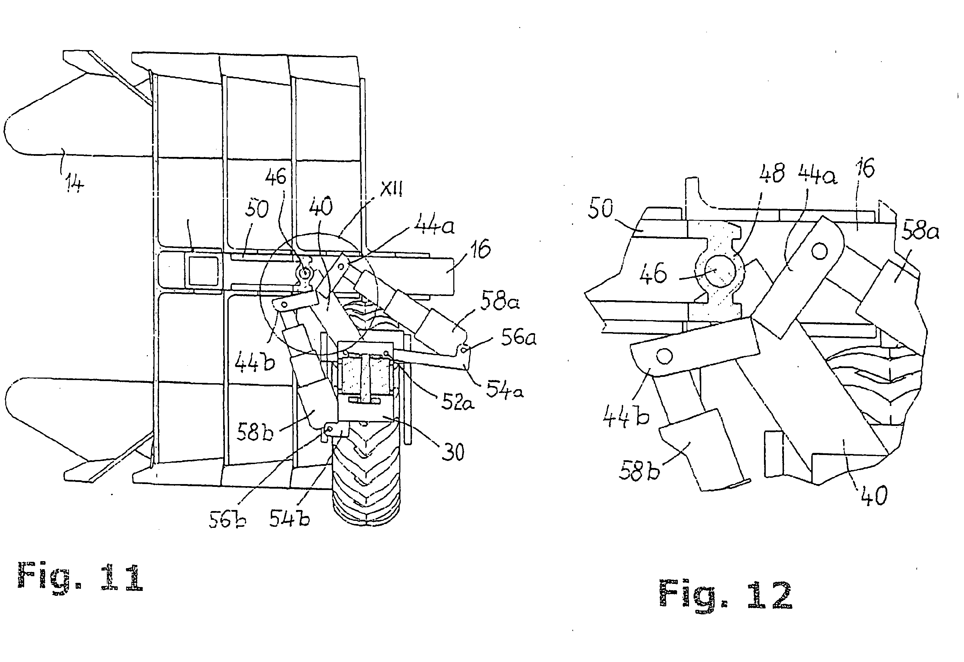

Ist die Anschlagposition erreicht (Fig. 12), wurde der Pflugrahmen 16 nicht nur soweit angehoben, daß der Wendevorgang durchgeführt werden kann, sondern er wurde auch, wie etwa ein Vergleich der Figuren 3 und 10 oder 4 und 11 zeigt, parallel zu sich selbst in Richtung auf die durch die Achse der Drehlagerung 36 am Aufsattelfahrwerk 18 verlaufende Vertikalebene verlagert, wodurch sich in vorteilhafter Weise das für den Wendevorgang auszuübende Drehmoment reduziert hat.

Nach der Aufhebung der Sperre der Drehbewegung des Pflugrahmens 16 wird der Schwenkarm 40 in seine vertikale Lage (Fig. 18) verschwenkt und zugleich dreht sich der Pflugrahmen 16 gegenüber dem Schwenkarm 40 in die in Fig. 18 gezeigte Transportstellung, in der er blockiert werden kann. Für die Fortsetzung des Wendevorgangs bewegt sich das System aus Schwenkarm 40 und Pflugrahmen 16 weiter und der Pflugrahmenschwerpunkt überschreitet diese Scheitelstellung, so daß der Pflugrahmen 16 unter dem Einfluß seines Gewichts bestrebt ist, seine neue Arbeitsstellung zu erreichen. Dabei wird der bis dahin aktive Stellzylinder 58 entlastet und zieht die ihm zugeordnete Pendelstütze 54 nach oben. In dieser Phase des Wendevorgangs können die Stellzylinder 58 zur Dämpfung der zweiten Phase der Wendebewegung eingesetzt werden.

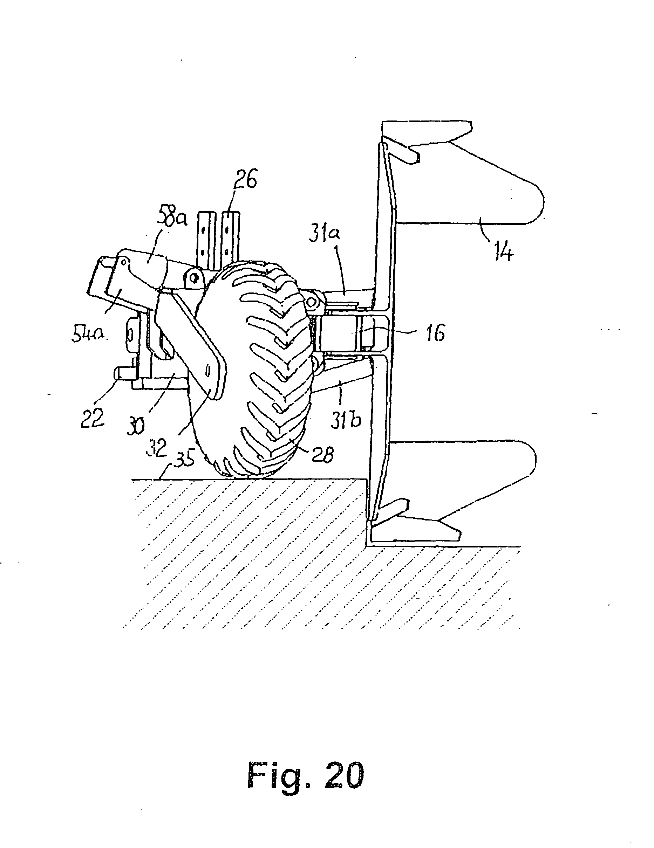

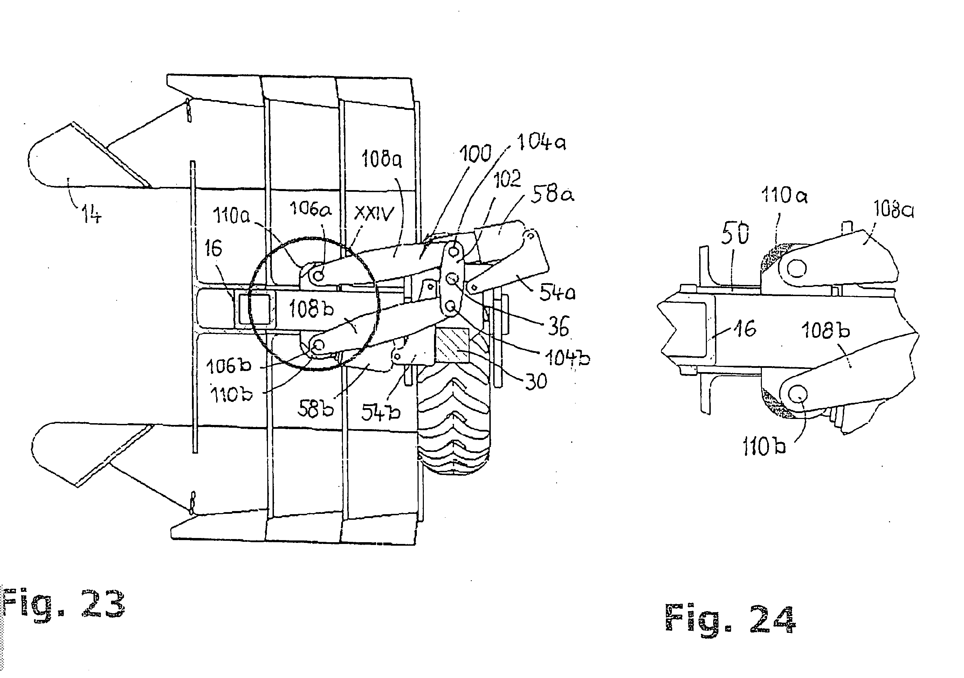

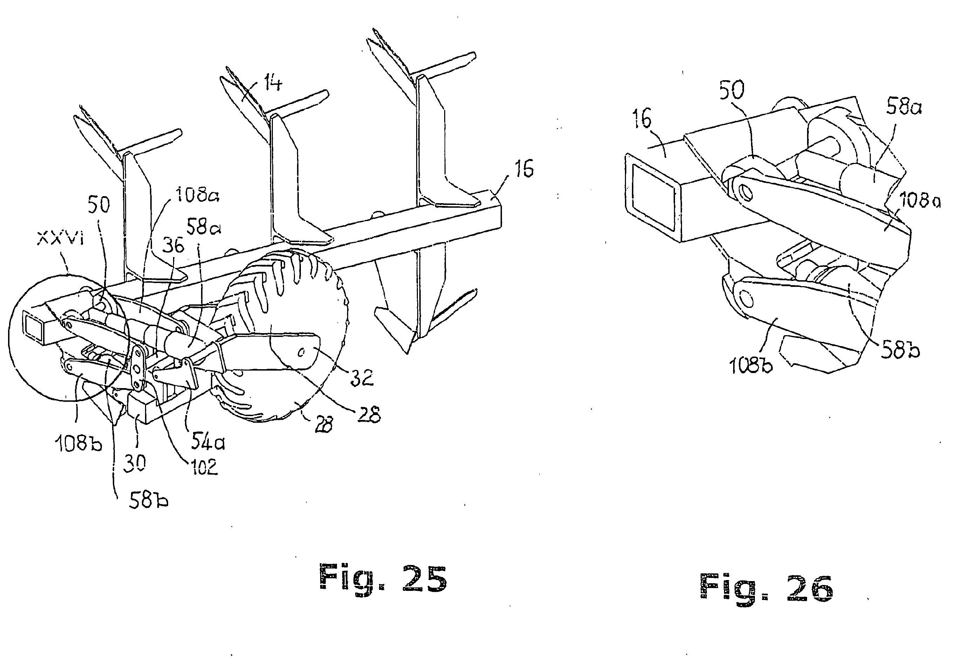

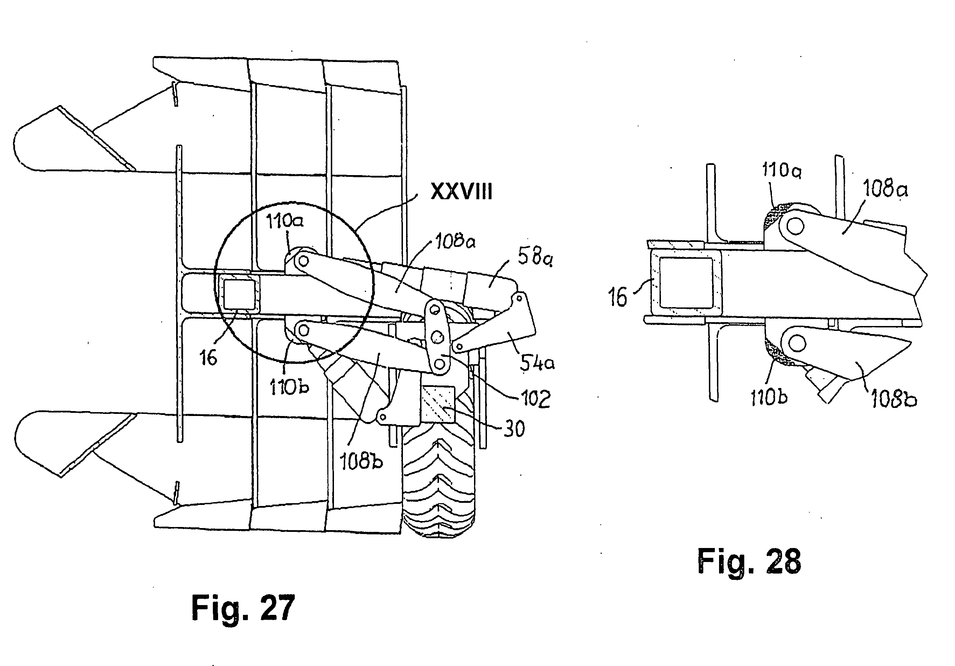

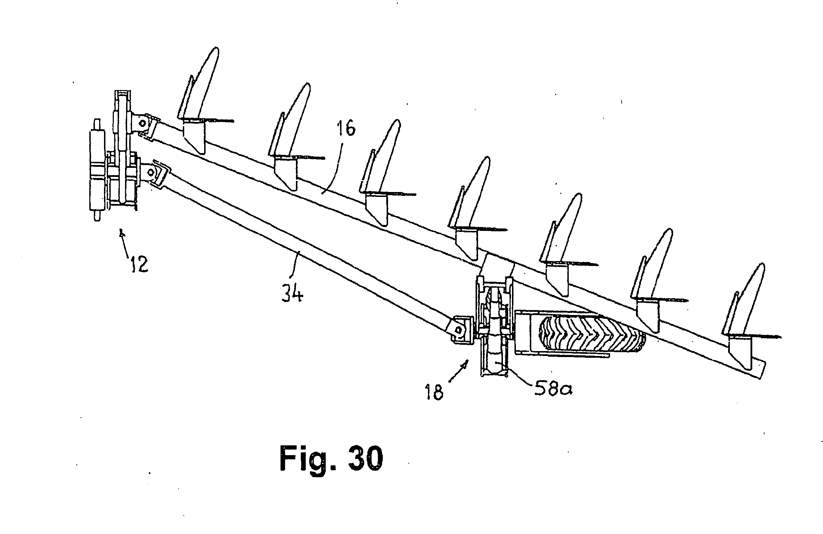

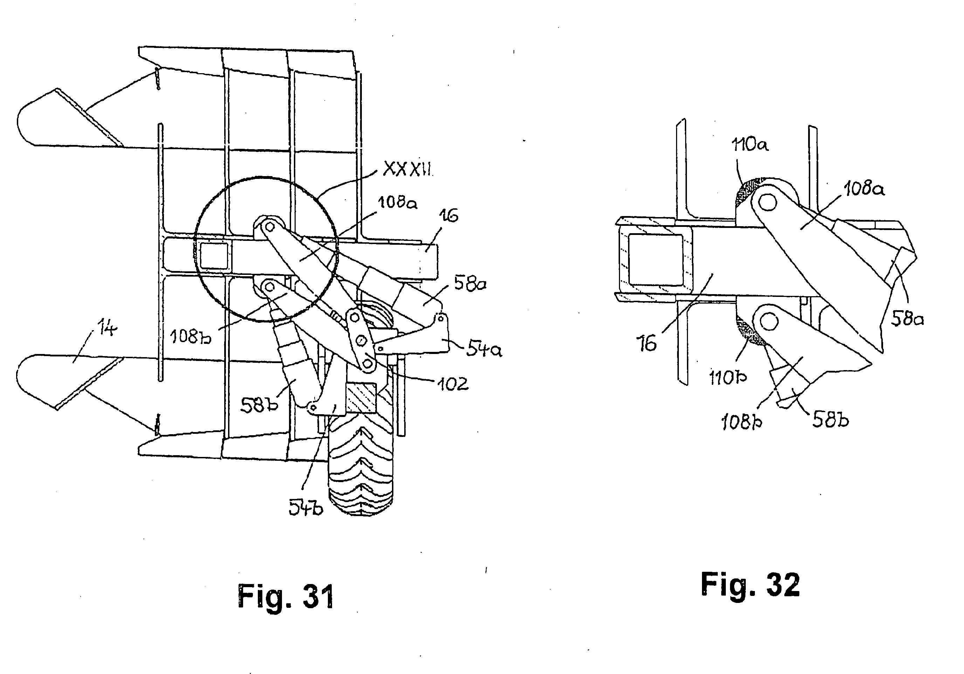

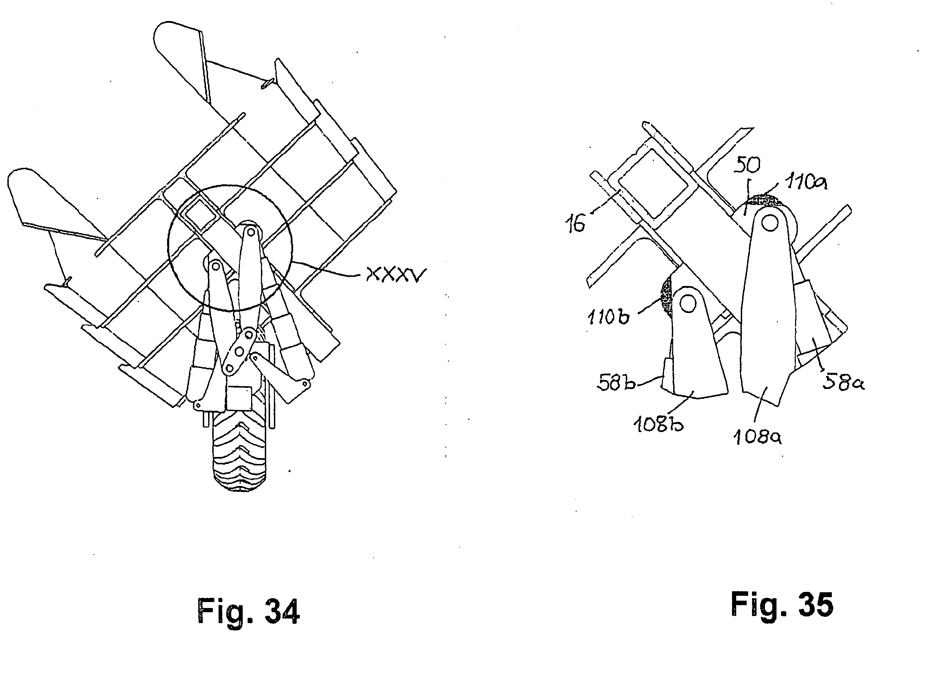

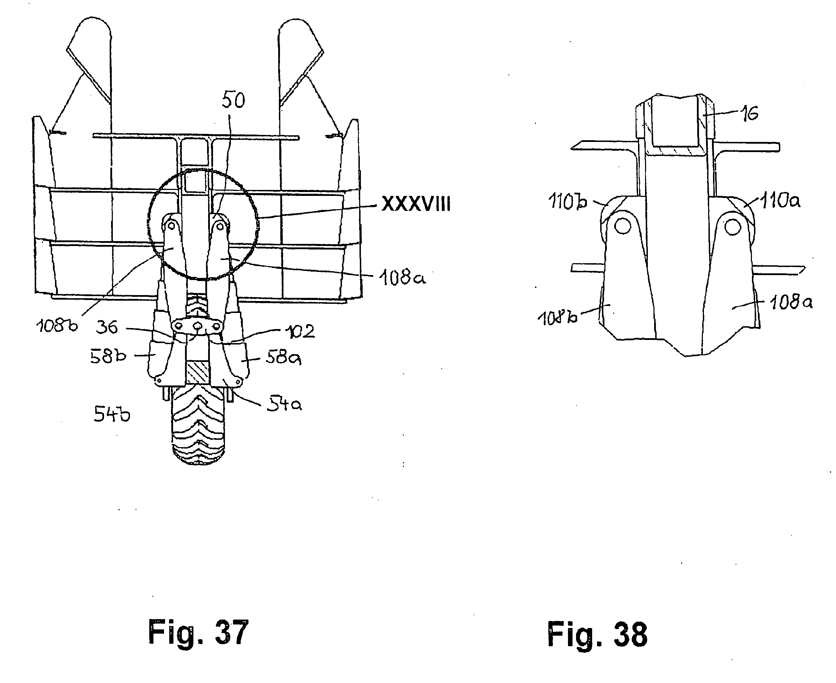

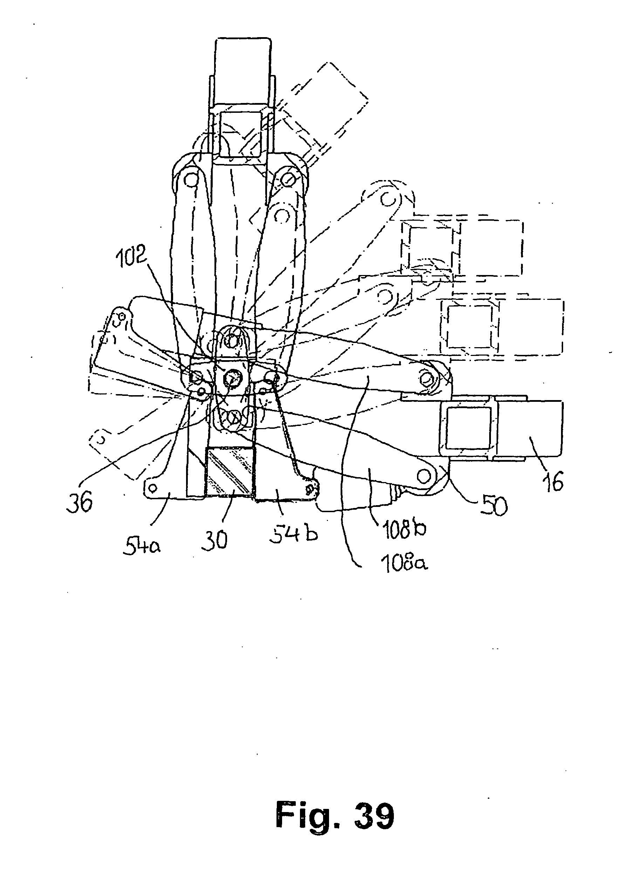

Anhand der Figuren 20 bis 39 wird eine vorteilhafte zweite Ausführungsform der Erfindung erläutert, bei der am Aufsattelfahrwerk 18 zwischen dem Grundkörper 30 und der Konsole 50 am Pflugrahmen 16 anstelle des Schwenkarms 40 ein insgesamt mit 100 bezeichnetes Viergelenk vorgesehen ist, das ebenso wie der Schwenkarm 40 aus zwei mit Abstand voneinander angeordneten, deckungsgleichen Baukörpem besteht, zwischen denen die Stellzylinder 58 beweglich sind. Den Elementen der ersten Ausführungsform gleichende oder ihnen entsprechende Elemente der zweiten Ausführungsform sind mit identischen Bezugszahlen versehen. Von einer erneuten Beschreibung ihrer Funktion wird abgesehen, soweit sie bereits aus der obigen Beschreibung ersichtlich ist.

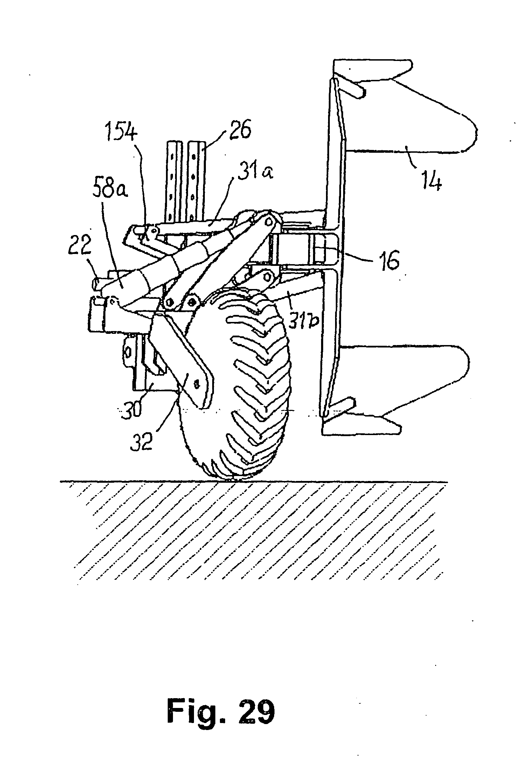

Die Basis des Viergelenks 100 bildet ein zweiarmiger Hebel 102, der mittig frei verschwenkbar im Drehlager 36 des Grundkörpers 30 gelagert ist. An den beiden freien Enden des Hebels 102 sind zwei jeweils zum Drehlager 36 achsparallele Gelenke 104a bzw. 104b vorgesehen. Die am Pflugrahmen 16 angeordnete und gemeinsam mit diesem um die durch die Lager 20 und 36 definierte Wendeachse bewegliche Konsole 50 ist symmetrisch mit Bezug auf die Symmetrieebene der am Pflugrahmen 16 angebrachten Pflugkörperpaare mit zwei weiteren Gelenken 106a bzw. 106b des Viergelenksystems 100 versehen. Zwischen den Gelenken 104a und 106a bzw. 104b und 106b ist jeweils ein Lenker 108a bzw. 108b angeordnet. In der Umgebung der Gelenke 106a und 106b sind an der Konsole 50 Anschläge 110a bzw. 110b vorgesehen, die den der Außenseite des Viergelenks 100 zugewandten Seitenflächen 112a und 112b der Lenker 108a bzw. 108b derart zugeordnet sind, daß in der in den Figuren 29 bis 32 gezeigten Stellung, in der bei gesperrter Drehbewegung des Pflugrahmens 16 die Aufwärtsbewegung des Pflugrahmens 16 parallel zu sich selbst blockiert wird und die Fortsetzung dieser Aufwärtsbewegung nur unter gleichzeitiger Drehung des Pflugrahmens 16 um die durch die Lager 20 und 36 definierte Wendeachse stattfinden kann, was also ein Lösen der Sperre der Drehbewegung des Pflugrahmens 16 voraussetzt.

Die Bewegungsschritte des Wendevorgangs sind sowohl für das erste wie auch für das zweite Ausführungsbeipiel in übereinstimmenden Stufen dargestellt.

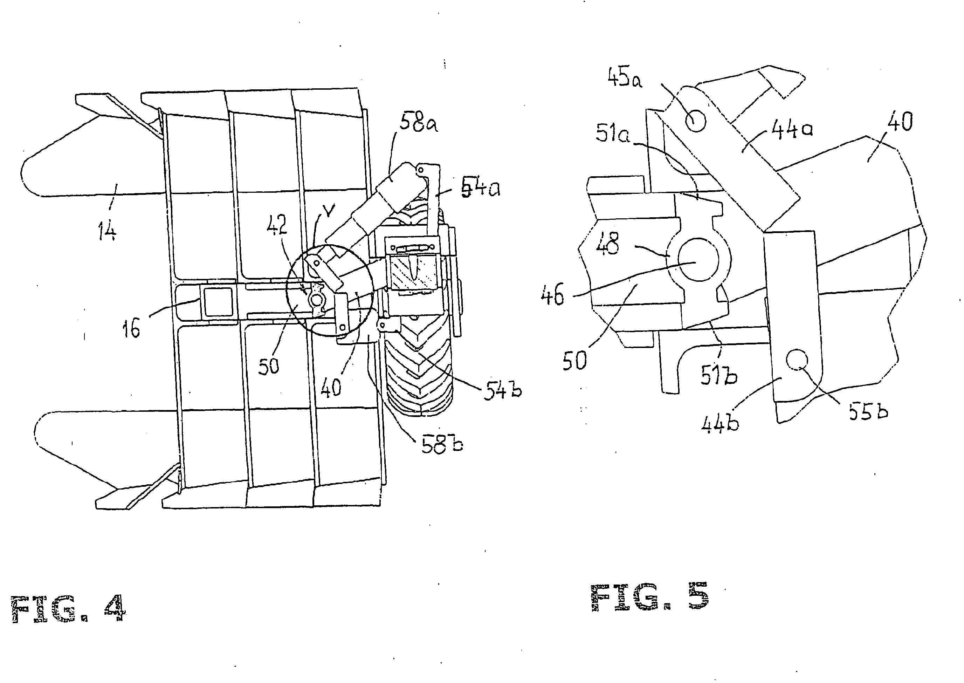

Die Fig. 1 zeigt den Pflug in einer ersten Arbeitsstellung, in der sich in Fahrtrichtung gesehen die Pflugkörper 14 rechts vom Pflugrahmen 16 befinden. In der Arbeitsstellung blockieren die Wendezylinder 31 a bzw. 31b (Fig 29) am Pflugkopf 12 eine Drehung des Pflugrahmens im Drehlager 20. Die Konsole 50 für den Anschluß des Aufsattelfahrwerks 18 befindet sich auf der linken Seite des Pflugrahmens 16 und - wie aus den Fig. 4 und 5 ersichtlich - erstreckt sich der Schwenkarm 40 schräg abwärts zur Konsole 50 und die Anschläge 44a und 44b weisen einen Abstand von den Anschlagflächen 51a bzw. 51 b an der Konsole 50 auf, so daß eine Drehbewegung des Schwenkarms 40 im Drehlager 36 (Figuren 18 und 19) nicht behindert ist. Bei der Bewegung in diese Position des Schwenkarms 40 wurde durch den Stellzylinder 58a die Pendelstütze 54a in die in Fig. 4 gezeigte Stellung nach oben geschwenkt.

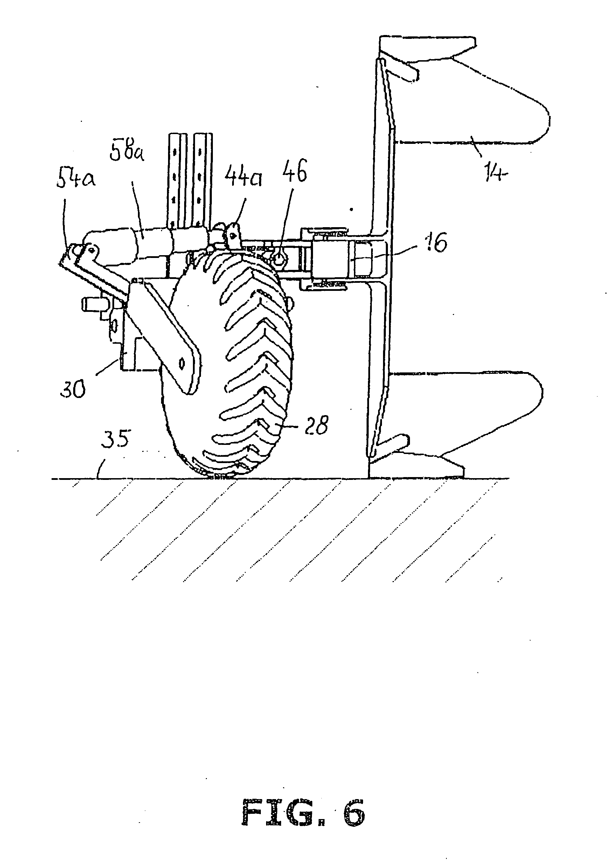

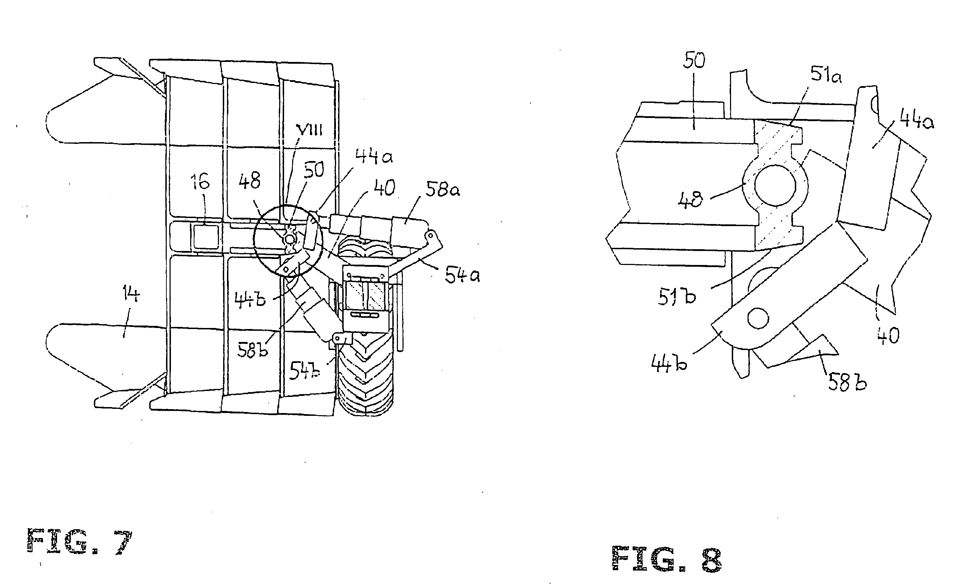

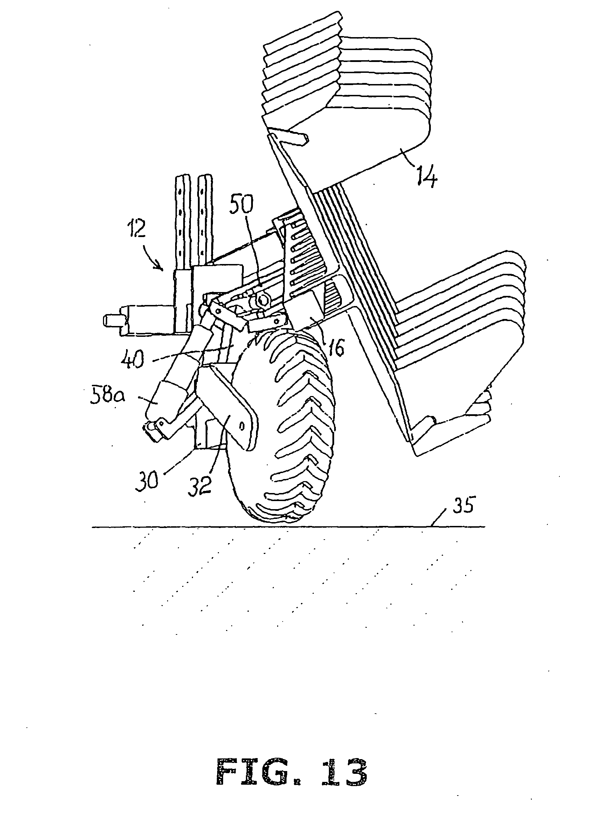

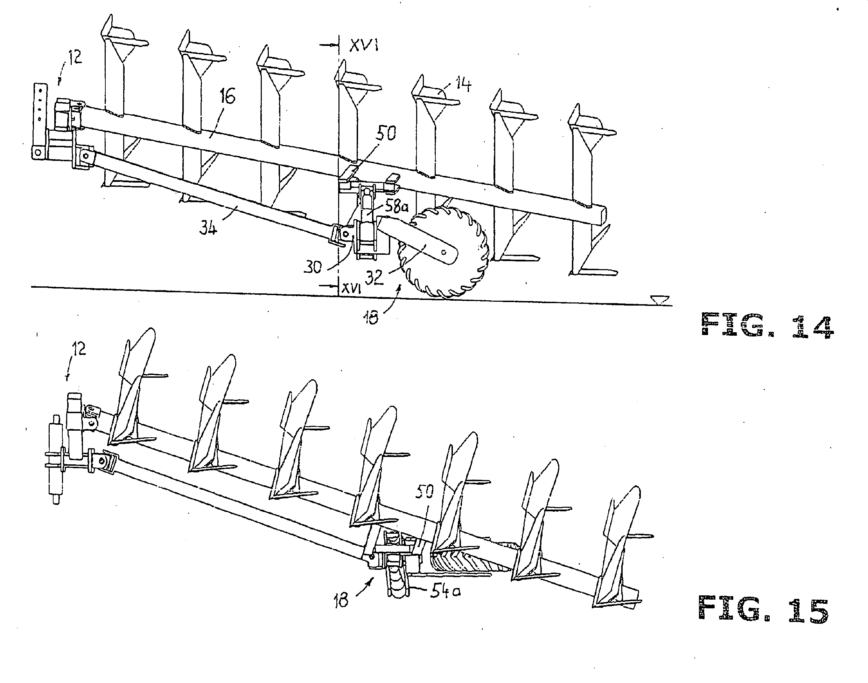

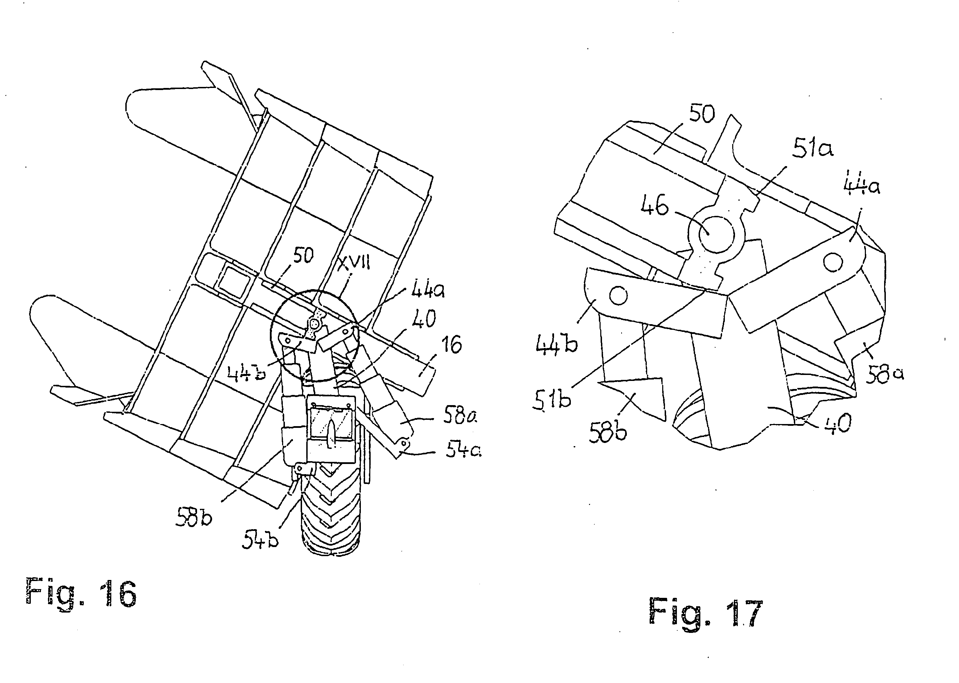

Wird der Stellzylinder 58b mit Druck beaufschlagt, verschwenkt er den Schwenkarm 40 aufwärts, d.h. in den Fig. 4 und 5 im Uhrzeigersinn. Dadurch wird entsprechend der Kreisbahn des Scharnierbolzens 46 der an einer Drehung gehinderte Pflugrahmen 16 aus dem Boden gehoben (Figuren 6 bis 9), und während der weiteren Bewegung des Schwenkarms 40 legt sich der Anschlag 44b gegen die Anschlagfläche 51 b. Diese Pflugstellung ist in den Figuren 9 bis 12 dargestellt. Bis zu dieser Pflugstellung wurde der Pflugrahmen 16 parallel zu sich selbst angehoben und der Pflugrahmenschwerpunkt dabei näher an die durch die Achse des Drehlagers 36 am Aufsattelfahrwerk verlaufende Vertikalebene herangerückt. Wird in dieser Stellung die Drehsperre für den Pflugrahmen 16 aufgehoben, tritt der Wendezylinder 31 b in Aktion, um die Drehbewegung des Pflugrahmens 16 um den Scharnierbolzen 46 einzuleiten. Zugleich nimmt der Pflugrahmen 16 an der weiteren Drehbewegung des Schwenkarms 40 teil, wenn sich der Scharnierbolzen 46 in den Scheitelpunkt seiner Kreisbahn bewegt und dabei die in den Fig. 13 bis 17 dargestellte geneigte Position durchläuft und der Pflugrahmen 16 schließlich die für den Transport geeignete, in Fig. 18 gezeigte Position erreicht, die der Pflugrahmen 16 beibehalten kann, wenn er wieder durch Aktivierung der Sperre an der Drehung im Lager 20 gehindert wird. Soll die andere Arbeitsstellung erreicht werden, bleibt die Sperre aufgehoben und der Scharnierbolzen 46 kann den Scheitelpunkt der Drehbewegung durchlaufen, wodurch nun das Gewicht des Pflugrahmens 16 bestrebt ist, den Pflugrahmen 16 in die neue Arbeitsstellung zu bewegen, wobei die Positionen nach den Figuren 1 bis 19 nun in umgekehrter Reihenfolge und spiegelbildlich zu der durch die Drehlagerung 36 gelegten Vertikalebene durchlaufen werden.

Die entsprechenden Bewegungsphasen sind für das zweite Ausführungsbeispiel in den Figuren 20 bis 39 dargestellt, wobei die Figuren 29 bis 32 das Ende der vertikalen Parallelbewegung des Pflugrahmens 16 und den Übergang zu dessen Schwenkbewegung gegenüber dem Drehlager 36 zeigen, nachdem die Seitenfläche 112b am Anschlag 110b anliegt.

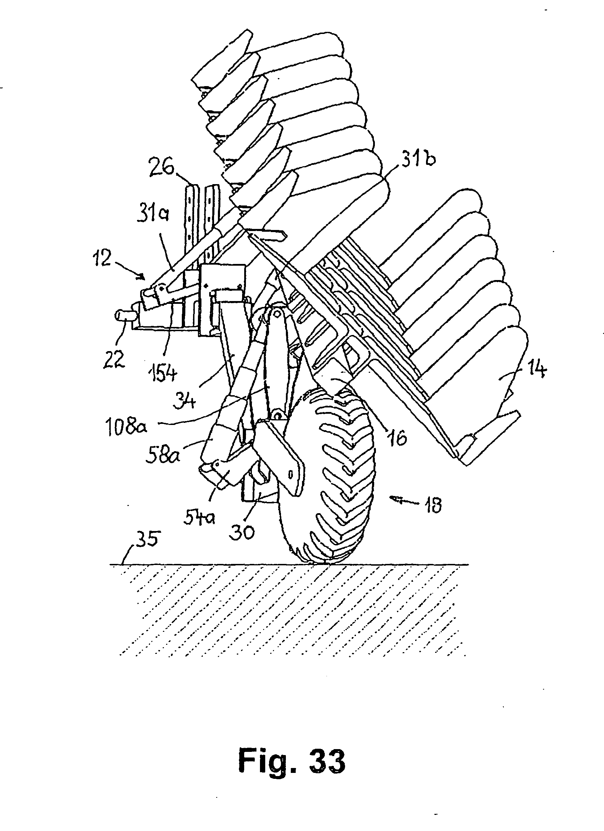

Die vorteilhafte Wirkung der erfindungsgemäßen Ausbildung der Hub- und Drehvorrichtung am Aufsattelfahrwerk 18 kann auch bei der Drehvorrichtung am Pflugkopf 12 genutzt werden. Beispielsweise ist bei der vorstehend erläuterten zweiten Ausführungsform deren Anwendung auch am Pflugkopf vorgesehen, wie deutlich in der Fig. 33 zu sehen ist, wo man die Abstützung des Wendezylinders 31 b am Pflugkopf 12 über eine an diesem gelenkig gelagerte Pendelstütze 154a erkennen kann.

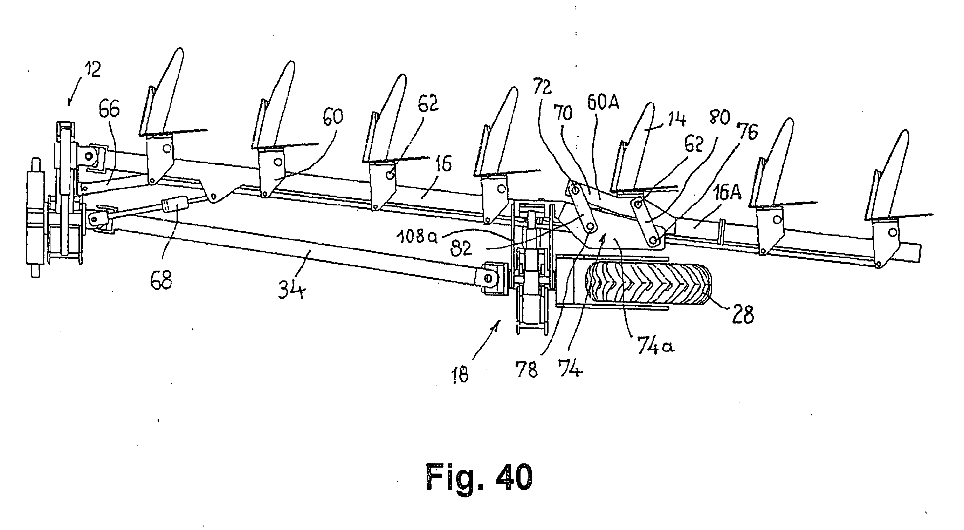

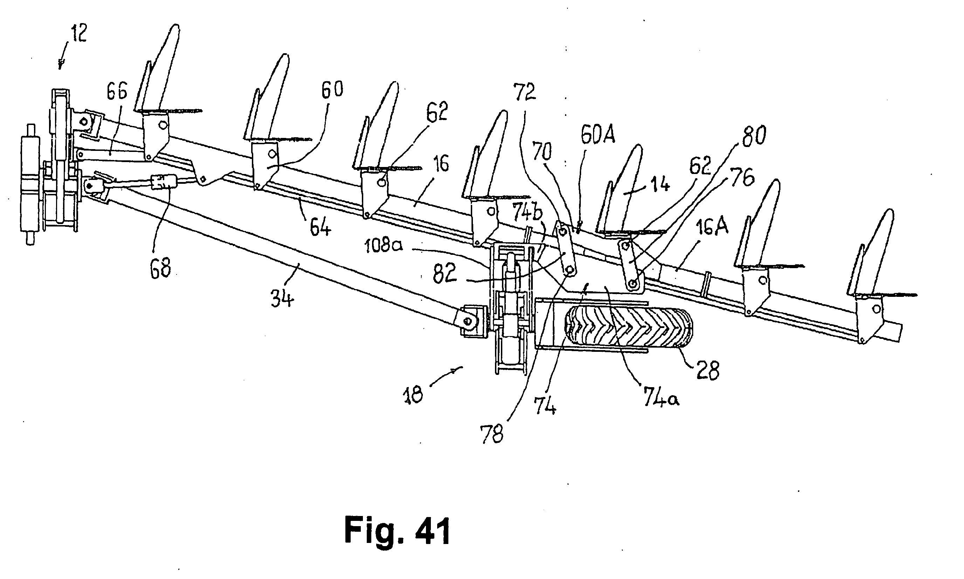

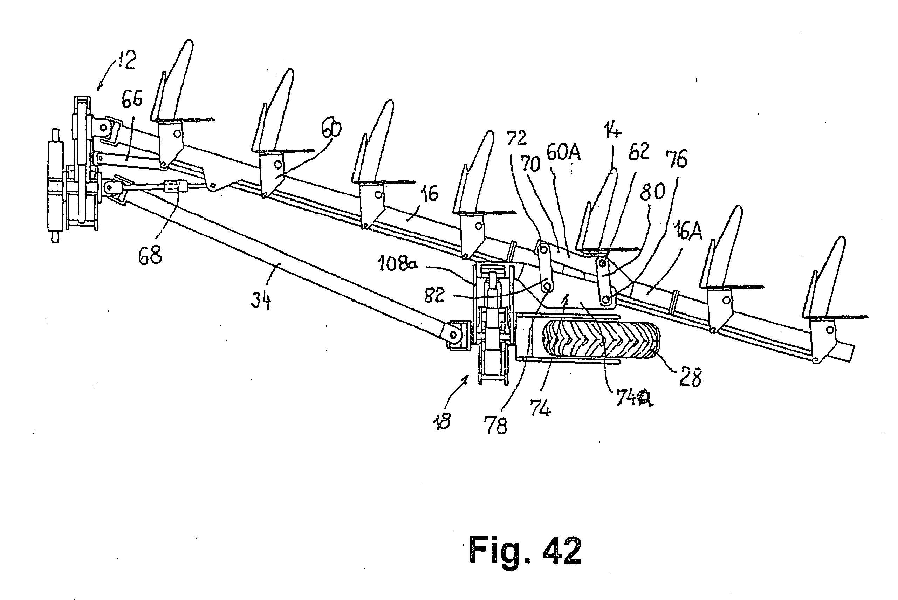

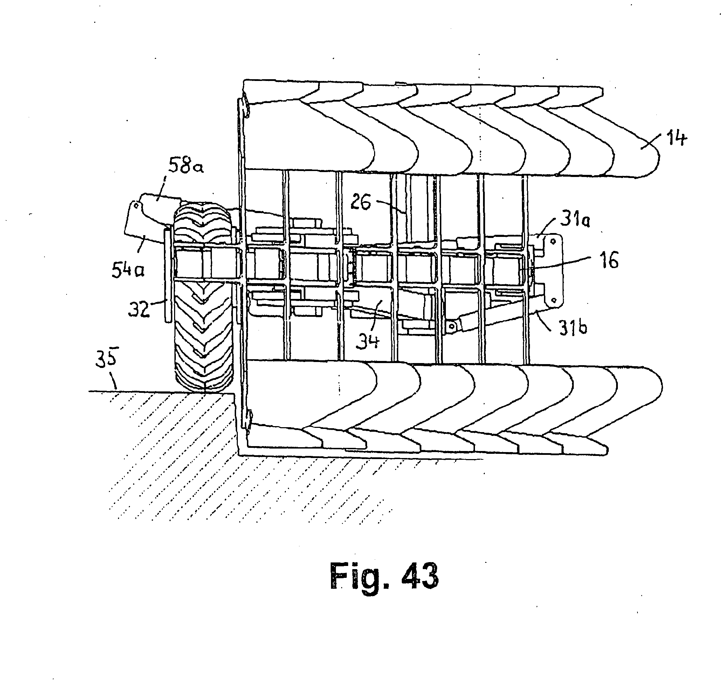

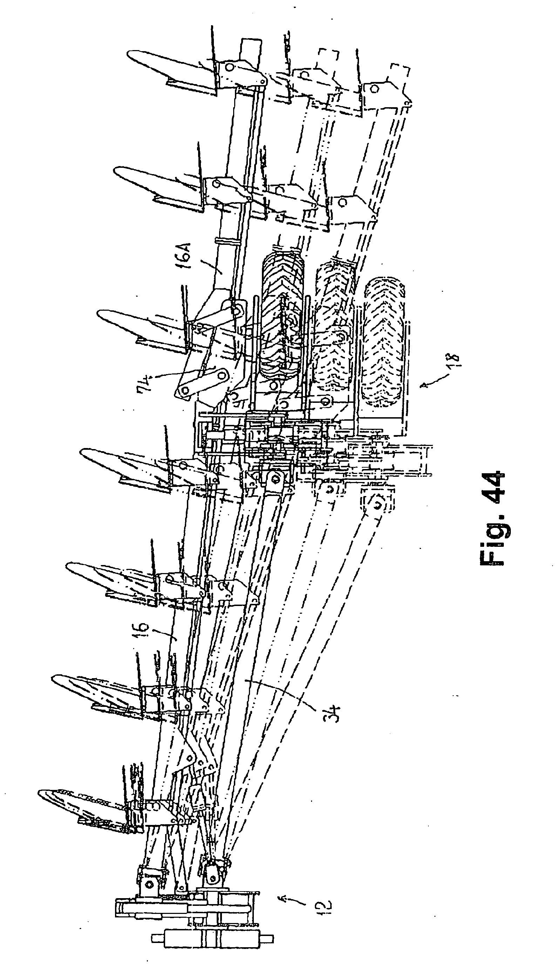

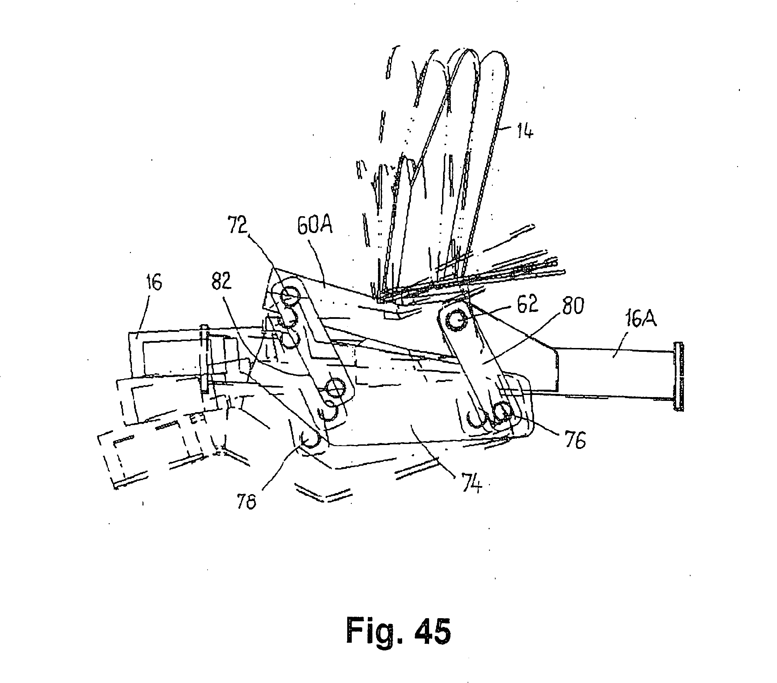

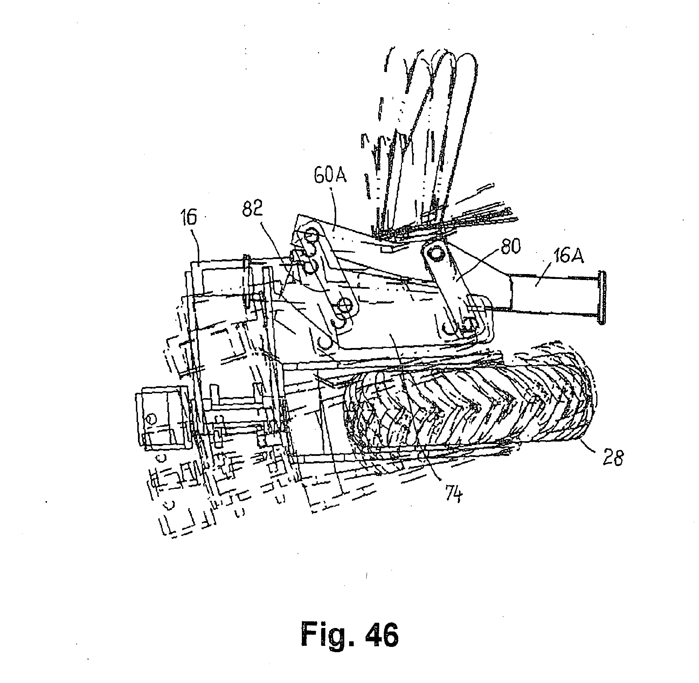

Die beiden vorstehend beschriebenen Ausführungsbeispiele sind für Aufsatteldrehpflüge ohne Einrichtung zur Schnittbreitenverstellung dargestellt und beschrieben. Anhand der Figuren 40 bis 46 wird eine Einrichtung zur Schnittbreitenverstellung erläutert, die für beide Ausführungsbeispiele geeignet ist, obwohl zur zeichnerischen Darstellung der Basiskonstruktion ein Aufsatteldrehpflug nach der zweiten Ausführungsform gewählt ist. Die Figuren 40 bis 42 zeigen einen Pflug in Arbeitsstellung, wobei die Fig. 40 die geringste Schnittbreite, die Fig. 41 eine mittlere und die Fig. 42 die größte Schnittbreite zeigt.

Zur Schnittbreitenverstellung ist jedes Paar von Pflugkörpern 14 jeweils mit einem gemeinsamen Träger 60 verbunden, der um jeweils eine in Arbeitsstellung des Pfluges etwa vertikale Achse 62 gegenüber dem Pflugrahmen 16 verschwenkbar ist.

Alle Träger 60 sind gelenkig mit einer Stellstange 64 verbunden, die über einen Lenker 66 mit dem Pflugkopf 12 verbunden ist, so daß sich die Stellstange 64 relativ zum Pflugrahmen 16 verschiebt, wenn durch einen Stellzylinder 68 der Winkel zwischen dem Pflugkopf 12 und dem Pflugrahmen 16 verändert wird. Die Längsbewegung der Stellstange 64 verursacht eine Schwenkbewegung der Träger 60 derart, daß die horizontale Schwenkbewegung des Pflugrahmens den Abstand der Pflugkörper quer zur Arbeitsrichtung und damit die Schnittbreite verändert, die Ausrichtung der Pflugkörper 14 in Arbeitsrichtung aber erhalten bleibt.

Durch die Verstellung der Schnittbreite und die damit verbundene Änderung des Winkels zwischen dem Pflugrahmen 16 und der Laufrichtung des Stützrads 28 verändert sich der Abstand zwischen dem Aufstandspunkt des Stützrads 28 und dem Pflugrahmenschwerpunkt, so daß sich ausgehend von der optimalen Schwerpunktsposition in der einen Endlage des Pflugrahmens 16 mit zunehmender Veränderung der Schnittbreite die erfindungsgemäß angestrebten Vorteile reduzieren, sofern nicht eine zusätzliche Vorrichtung in der Lage ist, die negative Auswirkung der Schnittbreitenverstellung auf die vorstehend erläuterte erfindungsgemäße Konstruktion auszugleichen.

Diesem Zweck dient die besondere Ausgestaltung des mit dem Aufsattelfahrwerk 18 verbundenen Elements 16A des Pflugrahmens 16, auf dem um eine der vertikalen Achsen 62 ein besonders gestalteter Träger 60A für eines der Pflugkörperpaare 14 gegenüber dem Pflugrahmen 16 verschwenkbar gelagert ist. Dieser Träger 16A ist mit einem in Bezug auf die Achse 62 etwa radial und in Längsrichtung des Pflugrahmens 16 in Richtung auf den Pflugkopf 12 vorspringenden Lenkerarm 70 versehen, der an seinem von der Achse 62 entfernten Ende ein zur Achse 62 achsparalleles Gelenk 72 besitzt. Die Lenker 108a und 108b des Aufsattelfahrwerks 18 sind mit ihrem dem Pflugrahmen 16 zugeordneten Ende an eine Konsole 74 angeschlossen, die gemeinsam mit dem Pflugrahmen 16 an dessen Drehbewegung um das Drehlager 20 am Pflugkopf und das Drehlager 36 am Aufsattelfahrwerk 18 teilnimmt, aber - wie nachfolgend noch beschrieben - während der Schnittbreitenverstellung in horizontaler Richtung beweglich ist und damit auch das an die Konsole 74 angeschlossene Aufsattelfahrwerk 18 verlagert.

Die Konsole 74 besteht aus einem plattenförmigen Hauptteil 74a, der mit zwei zur Achse 62 achsparallelen Gelenken 76 und 78 versehen ist, deren Verbindungsstrecke die gleiche Länge aufweist wie die Verbindungsstrecke zwischen der dem Träger 60A zugeordneten Achse 62 und dem Gelenk 72 und zu ihr parallel ist. Das Gelenk 76 und die genannte Achse 62 sind durch einen Lenker 80 verbunden. Die Gelenke 72 und 78 sind durch einen zum Lenker 80 parallelen Lenker 82 verbunden. Die Konsole 74 ist somit in ein Parallelogrammsystem einbezogen, wobei der Hauptteil 74a der Konsole 74 einen gegen den Pflugkopf 12 vorspringenden Arm 74b aufweist, an den die Lenker 108a und 108b angeschlossen sind.

Beim Verstellen der Schnittbreite verschwenkt sich mit dem Pflugrahmen 16 auch der Stabilisator 34. Die Verbindung zwischen dem Pflugrahmen 16 und dem Stabilisator 34 erfolgt über eine Gelenkkette, die von der Achse 62 am Träger 60A ausgeht und aus dem Lenker 80, der Konsole 74 und dem Aufsattelfahrwerk 18 besteht. Bezogen auf den Pflugkopf 12 ist der Schwenkradius der Achse 62 am Träger 60A wesentlich länger als der Schwenkradius des Anschlußpunktes des Stabilisators 34 am Aufsattelfahrwerk 18. Beim Verstellen der Schnittbreite wird deshalb durch die voneinander abweichenden Bahnkurven der Achse 62 und des Anschlußpunktes des Stabilisators 34 am Aufsattelfahrwerk 18 einerseits und durch die zwangsweise Verstellung des Trägers 60A, die über den Lenker 82 auf die Konsole 74 übertragen wird andererseits, die Konsole 74 verstellt, wie dies bei einem Vergleich der Figuren 41, 42 und 43 festgestellt werden kann. Mit der Verkleinerung der Schnittbreite wird die Konsole 74 näher an den Pflugrahmen 16 herangezogen und dadurch wird verhindert, daß sich der Abstand des Pflugrahmenschwerpunkts vom Aufstandspunkt des Aufsattelfahrwerks 18 und vom Drehlager 36 vergrößert und damit die Kippgefahr und der benötigte Kraftbedarf für das Wenden der Arbeitsstellung zunimmt.

In den beschriebenen Ausführungsbeispielen sind die Anschläge (z. B. 44 oder 110) als Festanschläge erläutert worden. Es ist auch darauf hingewiesen worden, dass diese Anschläge ggf. justierbar sein können. Gemäß einer nicht dargestellten Variante der Erfindung kann es auch vorgesehen sein, dass die betreffenden Anschläge bedarfsweise in eine inaktive Position versetzt werden können, in der Sie den Schwenkwinkel zwischen dem Pflugrahmen und dem Verbindungsglied nicht begrenzen. Das Verbindungsglied kann dann z. B. ausgehend von einer betreffenden Arbeitsstellung des Pflugrahmens in die vertikale Stellung verschwenkt werden, wobei der Pflugrahmen eine abgewinkelte Stellung bzw. Knickstellung relativ dazu einnehmen kann. In einer solchen Knickstellung kann die Anordnung für den Transport arretiert werden, so dass eine Transportstellung mit relativ niedrigem Schwerpunkt erzielbar ist.

## Patentansprüche

1. Aufsatteldrehpflug (10) mit einem zur Befestigung an der Hubvorrichtung eines Zugfahrzeugs geeigneten, einen Drehantrieb (31 a, 31 b) für den Wendevorgang eines eine Mehrzahl von Pflugkörperpaaren (14) tragenden Pflugrahmens (16) aufweisenden Pflugkopf (12), wobei der Pflugrahmen (16) um eine im wesentlichen horizontal und in Arbeitsrichtung des Pfluges verlaufende, durch ein Drehlager (20) am Pflugkopf (12) definierte Wendeachse zwischen zwei fixierbaren Arbeitsstellungen umstellbar ist und sein hinteres Ende von einem wenigsten ein Stützrad (28) aufweisenden Aufsattelfahrwerk (18) abgestützt ist, das mit einer Drehlagerung (36) für den Pflugrahmen (16) versehen ist, das über einen mit dem Pflugkopf (12) verbundenen Stabilisator (34) am Kippen gehindert ist und eine Hubvorrichtung (58a, 58b) zum Heben und Senken des Pflugrahmens (16) aufweist, **dadurch gekennzeichnet,**
**daß** das wenigstens eine Stützrad (28) an einem Fahrwerksgrundkörper (30) gelagert ist,
**daß** die Drehlagerung (36) am Fahrwerksgrundkörper (30) positioniert ist, daß an der Drehlagerung (36) wenigstens ein Verbindungsglied (40; 100) zum Pflugrahmen (16) gelagert ist, das über ein Gelenk (46; 106a, 106b) mit dem Pflugrahmen derart verbunden ist, daß der Schwenkwinkel zwischen Pflugrahmen und Verbindungsglied durch einen Anschlag (44a, 44b; 110a, 110b) begrenzt ist,
**daß** dem Verbindungsglied (40; 100) ein am Aufsattelfahrwerk (18) angebrachter Antrieb (58a, 58b) derart zugeordnet ist, daß ausgehend von einer sich vom Grundkörper (30) aus seitlich erstreckenden, einer der fixierbaren Arbeitsstellungen des Pflugrahmens (16) zugeordneten Grundstellung bei fixiertem Pflugrahmen das Verbindungsglied (40; 100) gegenüber dem Grundkörper (30) unter Anhebung des Gelenks (46; 106a, 106b) in Richtung auf eine etwa vertikale Stellung verschwenkbar ist und das Gelenk (46; 106a, 106b) durch den Anschlag blockiert ist, wenn der Pflugrahmen (16) die für den Wendevorgang erforderliche Bodenfreiheit erreicht hat, und
**daß** eine Steuerung geeignet ist, beim Erreichen der blockierten Stellung des Gelenks 46; 106a, 106b) die Fixierung des Pflugrahmens (16) gegenüber dem Pflugkopf (12) zu lösen und den Drehantrieb (31a, 31b) einzuschalten.

2. Aufsatteldrehpflug nach Anspruch 1, **dadurch gekennzeichnet, daß** der Antrieb aus zwei Hydraulikzylindern (58a, 58b) besteht, die jeweils einer der beiden Wenderichtungen des Pflugrahmens (16) zugeordnet sind.

3. Aufsatteldrehpflug nach Anspruch 2, **dadurch gekennzeichnet, daß** jedem Hydraulikzylinder (58a, 58b) eine als Winkelhebel gestaltete Pendelstütze (54a, 54b) zugeordnet ist, deren langer Schenkel mit seinem oberen Ende um eine zur Achse der Drehlagerung (36) parallele Achse beweglich an jeweils einer der Seiten des Grundkörpers (30) gelagert ist und am unteren Ende einen seitlich vom Grundkörper (30) vorspringenden kurzen Schenkel aufweist, an dem ein Ende des Hydraulikzylinders (58a, 58b) angeschlossen ist, wobei der Druck des Hydraulikzylinders (58a, 58b) durch Anlage der Pendelstütze (54a, 54b) am Grundkörper (30) abgestützt ist.

4. Aufsatteldrehpflug nach einem der vorhergehenden Ansprüche, **dadurch gekennzeichnet, daß** das Verbindungsglied aus einem in der Drehlagerung (36) gelagerten Schwenkarm (40) besteht, der zwei in Bezug auf seine vertikale Mittelstellung symmetrische, den beiden Arbeitsstellungen des Pflugrahmens (16) zugeordnete Endstellungen aufweist und über ein an ihm angeordnetes, auf einer Kreisbahn um das Drehlager (36) bewegliches Gelenk (42) mit dem Pflugrahmen (16) verbunden ist, und daß am Schwenkarm (40) beiderseits in Drehrichtung dem Pflugrahmen (16) zugeordnete Anschläge (44a, 44b) zur jeweiligen Begrenzung des Schwenkwinkels angeordnet sind.

5. Aufsatteldrehpflug nach einem der Ansprüche 2 oder 3 und Anspruch 4, **dadurch gekennzeichnet, daß** die Anschläge (44a, 44b) als seitliche Vorsprünge des Schwenkarms (40) ausgebildet sind.

6. Aufsatteldrehpflug nach Anspruch 5, **dadurch gekennzeichnet, daß** die Hydraulikzylinder (58a, 58b) des Antriebs jeweils mit einem der Anschläge (44a, 44b) verbunden sind.

7. Aufsatteldrehpflug nach einem der Ansprüche 1 bis 3, **dadurch gekennzeichnet, daß** das Verbindungsglied von einem Viergelenksystem (100) gebildet wird, dessen Basis ein mittig an der Drehlagerung gelagerter zweiarmiger Hebel (102) ist, dessen beide Enden jeweils gelenkig über einen Lenker (80, 82) mit jeweils einer von zwei symmetrisch zur Wendeachse am Pflugrahmen angeordneten Lagerstellen ((106a, 106b) verbunden sind.

8. Aufsatteldrehpflug nach Anspruch 7, **dadurch gekennzeichnet, daß** im Bereich der Lagerstellen (106a, 106b) der Pflugrahmen (16) mit jeweils einer mit dem seitlichen Rand (112a, 112b) der Lenker (80, 82) zusammenwirkenden Anschlagfläche (110a, 110b) versehen ist.

9. Aufsatteldrehpflug nach einem der Ansprüche 7 oder 8, **dadurch gekennzeichnet, daß** die Lagerstellen (106a, 106b) am Pflugrahmen (16) an einer am Pflugrahmen angebrachten Konsole (50) vorgesehen sind.

10. Aufsatteldrehpflug nach einem der vorhergehenden Ansprüche und mit einer Vorrichtung (60, 62, 64, 66, 68) zum gemeinsamen Verstellen der Schnittbreite der Pflugkörper (14), wobei jedem Pflugkörperpaar ein gemeinsamer Träger (60) zugeordnet ist und der Winkel zwischen der Schnittrichtung des Pflugkörpers (14) und der Längsrichtung des Pflugrahmens (16) für jedes Pflugkörperpaar **dadurch** verstellbar ist, daß jeder Träger (60) um eine jedem Pflugkörperpaar zugeordnete Drehachse (62) am Pflugrahmen (16) verstellbar ist und zur gemeinsamen Verstellung aller Pflugkörper (14) die Träger (60) mit gleichem Abstand von der Drehachse (62) gelenkig mit einem starren Stellglied (64) verbunden sind, **dadurch gekennzeichnet,**
**daß** im Bereich des Aufsattelfahrwerks (18) der Pflugrahmen (16) mit einer Montagekonsole (74) zur Verbindung mit dem Aufsattelfahrwerk (18) versehen ist, an der das wenigstens eine Verbindungsglied (100) angeschlossen ist, wobei die Montagekonsole (74) und ein in ihrem Bereich befindlicher Träger (60A), der einen in Bezug auf seine Drehachse (62) sich radial und etwa in Längsrichtung des Pflugrahmens (16) erstreckenden Lenkerarm (70) aufweist, zwei einander parallel gegenüberliegende Glieder eines Gelenkparattelogramms bilden, dessen beide anderen zueinander parallelen Glieder (80, 82) die Montagekonsole (74) einerseits mit der Drehachse (62) des Trägers (60A) und andererseits mit dem davon entfernten Ende des Lenkerarms (70) verbinden.

11. Aufsatteldrehpflug nach einem der vorhergehenden Ansprüche, **dadurch gekennzeichnet, daß** der maximale Schwenkwinkel zwischen Pflugrahmen (16) und Verbindungsglied (40; 100) durch Verstellbarkeit des Anschlags bzw. der Anschläge (44a, 44b; 110a, 110b) wählbar ist.

## Claims

1. Semimounted reversible plough (10) with a plough head (12) suitable for securing onto the lifting device of a traction vehicle, comprising a rotary drive (31 a, 31 b) for the reversing process of a plough frame (16) supporting a plurality of plough body pairs (14), wherein the plough frame (16) can be adjusted about a substantially horizontal reversing axis running in the operating direction of the plough and defined by a rotary bearing (20) on the plough head (12) between two fixable operating positions and its rear end is supported by a semimounted undercarriage (18) comprising at least one support wheel (28), which undercarriage is provided with a rotary bearing (36) for the plough frame (16), which is prevented from tilting by a stabiliser (34) connected to the plough head (12) and comprises a lifting device (58a, 58b) for lifting and lowering the plough frame (16),
**characterised in that** at least one support wheel (28) is mounted on an undercarriage basic body (30),
**in that** the rotary bearing (36) is positioned on the undercarriage basic body (30), **in that** on the rotary bearing (36) at least one connecting member (40; 100) to the plough frame (16) is mounted, which is connected via an articulation (46; 106a, 106b) to the plough frame, such that the pivot angle between the plough frame and connecting member is delimited by a stop (44a, 44b; 110a, 110b), **in that** a drive (58a, 58b) attached to the semimounted undercarriage (18) is assigned to the connecting member (40; 100), such that from a basic position extending laterally from the basic body (30) and assigned to one of the fixable operating positions of the plough frame (16) with a fixed plough frame the connecting member (40; 100) is pivotable relative to the basic body (30) by lifting the articulation (46; 106a, 106b) in the direction of an almost vertical position and the articulation (46; 106a, 106b) is blocked by the stop, when the plough frame (16) has achieved the required ground clearance for the reversing process, and
**in that** a control is suitable on reaching the blocked position of the articulation (46; 106a, 106b) to release the securing of the plough frame (16) relative to the plough head (12) and switch on the rotary drive (31a, 31 b).

2. Semimounted reversible plough according to claim 1, **characterised in that** the drive consists of two hydraulic cylinders (58a, 58b), which are assigned respectively to one of the two reversing directions of the plough frame (16).

3. Semimounted reversible plough according to claim 2, **characterised in that** a pendulum support (54a, 54b) designed as an angle lever is assigned to each hydraulic cylinder (58a, 58b), the longer arm of which is mounted at its upper end to be movable about an axis parallel to the axis of the rotary bearing (36) on one of the sides of the basic body (30) and at the other end comprises a short arm projecting laterally from the basic body (30), to which arm one end of the hydraulic cylinder (58a, 58b) is connected, wherein the pressure of the hydraulic cylinder (58a, 58b) is supported by arranging the pendulum support (54a, 54b) on the basic body (30).

4. Semimounted reversible plough according to one of the preceding claims, **characterised in that** the connecting member consists of a pivot arm (40) mounted in the rotary bearing (36), which pivot arm in relation to its vertical middle position has two symmetrical end positions assigned to the two operating positions of the plough frame (16) and is connected to the plough frame (16) by means of an articulation (42) arranged thereon and movable in a circular track around the rotary bearing (36), and **in that** on the pivot arm (40) stops (44a, 44b) assigned to the plough frame (16) on both sides in rotational direction are arranged for the respective delimitation of the pivot angle.

5. Semimounted reversible plough according to one of claims 2 or 3 and claim 4, **characterised in that** the stops (44a, 44b) are designed to be lateral projections of the pivot arm (40).

6. Semimounted reversible plough according to claim 5, **characterised in that** the hydraulic cylinders (58a, 58b) of the drive are connected respectively to one of the stops (44a, 44b).

7. Semimounted reversible plough according to one of claims 1 to 3, **characterised in that** the connecting member is formed by a four-bar system (100), the base of which is a two-arm lever (102) mounted centrally on the rotary bearing, the two ends of which are connected via articulation by a link (80, 82) to one of two bearing points (106a, 106b) arranged symmetrically to the reversible axis on the plough frame.

8. Semimounted reversible plough according to claim 7, **characterised in that** in the region of the bearing points (106a, 106b) the plough frame (16) is provided respectively with a stop surface (110a, 110b) interacting with the lateral edge (112a, 112b) of the link (80, 82).

9. Semimounted reversible plough according to one of claims 7 or 8, **characterised in that** the bearing points (106a, 106b) are provided on the plough frame (16) on a console (50) attached to the plough frame.

10. Semimounted reversible plough according to one of the preceding claims and with a device (60, 62, 64, 66, 68) for the joint adjustment of the cutting width of the plough body (14), whereby a common carrier (60) is assigned to each plough body pair and the angle between the cutting direction of the plough body (14) and the longitudinal direction of the plough frame (16) for each plough body pair can be adjusted in that each carrier (60) can be adjusted about a rotary axis (62) assigned to each plough body pair on the plough frame (16) and for the joint adjustment of all of the plough bodies (14) the carriers (60) are connected equidistant from the rotary axis (62) by articulation with a rigid adjusting member (64), **characterised in that** in the region of the semimounted undercarriage (18) the plough frame (16) is provided with an assembly console (74) for connecting with the semimounted undercarriage (18), to which the least one connecting member (100) is connected, whereby the assembly console (74) and a carrier (60A) located in the region thereof, which comprises a link arm (70) extending in relation to its rotational axis (62) radially and in longitudinal direction of the plough frame (16), form two opposite parallel members of an articulation parallelogram, the two other parallel members (80, 82) of which connect the assembly console (74) on the one hand with the rotary axis (62) of the carrier (60A) and on the other hand with the end of the link arm (70) remote therefrom.

11. Semimounted reversible plough according to one of the preceding claims, **characterised in that** the maximum pivot angle between the plough frame (16) and connecting member (40; 100) can be selected by adjusting the stop or the stops (44a, 44b; 110a, 110b).

## Revendications

1. Charrue réversible semi-portée (10) avec une tête de charrue (12) appropriée à la fixation sur le dispositif de levage d'un véhicule tracteur, présentant un entraînement rotatif (31a, 31b) pour le processus de renversement d'un châssis de charrue (16) portant une pluralité de paires de corps de charrue (14), le châssis de charrue (16) pouvant être déplacé autour d'un axe de renversement défini par un coussinet de pivotement (20) sur la tête de charrue (12), s'étendant essentiellement horizontalement et dans le sens de travail de la charrue entre deux positions de travail pouvant être fixées et son extrémité arrière étant supportée par un mécanisme de roulement semi-porté (18) présentant au moins une roue d'appui (28), qui est pourvu d'un logement rotatif (36) pour le châssis de charrue (16) qui est empêché de basculer par le biais d'un stabilisateur (34) relié à la tête de charrue (12) et présente un dispositif de levage (58a, 58b) pour lever et abaisser le châssis de charrue (16), **caractérisée en ce que**
l'au moins une roue d'appui (28) est logée sur un corps de base de mécanisme de roulement (30),
**en ce que** le logement rotatif (36) est positionné sur le corps de base de mécanisme de roulement (30),
**en ce que** sur le logement rotatif (36) est logé au moins un organe de liaison (40 ; 100) au châssis de charrue (16) qui est relié via une articulation (46 ; 106a, 106b) au châssis de charrue de telle sorte que l'angle de pivotement entre le châssis de charrue et l'organe de liaison soit limité par une butée (44a, 44b ; 110a, 110b),
**en ce qu'**un entraînement (58a, 58b) monté sur le mécanisme de roulement semi-porté (18) est associé à l'organe de liaison (40 ; 100) de telle sorte qu'en partant d'une position de base associée aux positions de travail pouvant être fixées du châssis de charrue (16), s'étendant latéralement du corps de base (30) en cas de châssis de charrue fixé, l'organe de liaison (40 ; 100) peut être pivoté par rapport au corps de base (30) en levant l'articulation (46 ; 106a, 106b) en direction d'une position à peu près verticale et l'articulation (46 ; 106a, 106b) est bloquée par la butée lorsque le châssis de charrue (16) a atteint la garde au sol nécessaire au processus de renversement, et
**en ce qu'**une commande est appropriée afin de détacher lors de l'atteinte de la position bloquée de l'articulation (46 ; 106a, 106b), la fixation du châssis de charrue (16) par rapport à la tête de charrue (12) et mettre en service l'entraînement rotatif (31 a, 31 b).

2. Charrue réversible semi-portée selon la revendication 1, **caractérisée en ce que** l'entraînement se compose de deux vérins hydrauliques (58a, 58b) qui sont associés respectivement à l'un des deux sens de renversement du châssis de charrue (16).

3. Charrue réversible semi-portée selon la revendication 2, **caractérisée en ce qu'**un support oscillant (54a, 54b) conçu comme un levier d'angle est associé à chaque vérin hydraulique (58a, 58b), dont le long côté est logé avec son extrémité supérieure de manière mobile autour d'un axe parallèle à l'axe du logement rotatif (36) sur respectivement l'un des côtés du corps de base (30) et présente sur l'extrémité inférieure un côté court saillant latéralement du corps de base (30), auquel une extrémité du vérin hydraulique (58a, 58b) est raccordée, la pression du vérin hydraulique (58a, 58b) étant soutenue par l'appui du support oscillant (54a, 54b) sur le corps de base (30).

4. Charrue réversible semi-portée selon l'une quelconque des revendications précédentes, **caractérisée en ce que** l'organe de liaison se compose d'un bras de pivotement (40) logé dans le logement rotatif (36) qui présente deux positions finales associées aux deux positions de travail du châssis de charrue (16), symétriques par rapport à sa position centrale verticale et est relié via une articulation (42) mobile sur une trajectoire circulaire autour du coussinet de pivotement (36), disposée sur celui-ci au châssis de charrue (16) et **en ce que** des butées (44a, 44b) associées au châssis de charrue (16) pour la limitation respective de l'angle de pivotement sont disposées sur le bras de pivotement (40) de chaque côté dans le sens de rotation.

5. Charrue réversible semi-portée selon l'une quelconque des revendications 2 ou 3 et la revendication 4, **caractérisée en ce que** les butées (44a, 44b) sont réalisées comme des saillies latérales du bras de pivotement (40).

6. Charrue réversible semi-portée selon la revendication 5, **caractérisée en ce que** les vérins hydrauliques (58a, 58b) de l'entraînement sont reliés respectivement à l'une des butées (44a, 44b).

7. Charrue réversible semi-portée selon l'une quelconque des revendications 1 à 3, **caractérisée en ce que** l'organe de liaison est formé par un système à quatre articulations (100), dont la base est un levier (102) à deux bras logé au milieu sur le logement rotatif, dont les deux extrémités sont reliées respectivement de manière articulée via une bielle (80, 82) à respectivement l'un des deux points d'appui (106a, 106b) disposés de manière symétrique à l'axe de renversement sur le châssis de charrue.

8. Charrue réversible semi-portée selon la revendication 7, **caractérisée en ce que** dans la zone des points d'appui (106a, 106b), le châssis de charrue (16) est pourvu respectivement d'une surface de butée (110a, 110b) coopérant avec le bord (112a, 112b) latéral de la bielle (80, 82).

9. Charrue réversible semi-portée selon l'une quelconque des revendications 7 ou 8, **caractérisée en ce que** les points d'appui (106a, 106b) sur le châssis de charrue (16) sont prévus sur une console (50) montée sur le châssis de charrue.

10. Charrue réversible semi-portée selon l'une quelconque des revendications précédentes et avec un dispositif (60, 62, 64, 66, 68) pour le réglage commun de la largeur de coupe des corps de charrue (14), à chaque paire de corps de charrue étant associé un support (60) commun et l'angle entre le sens de coupe du corps de charrue (14) et le sens longitudinal du châssis de charrue (16) pour chaque paire de corps de charrue étant réglable en ce que chaque support (60) est réglable autour d'un axe de rotation (62) associé à chaque paire de corps de charrue sur le châssis de charrue (16) et pour le réglage commun de tous les corps de charrue (14), les supports (60) sont reliés à la même distance de l'axe de rotation (62) de manière articulée à un organe de réglage (64) fixe, **caractérisée en ce que**
dans la zone du mécanisme de roulement semi-porté (18), le châssis de charrue (16) est pourvu d'une console de montage (74) pour la liaison au mécanisme de roulement semi-porté (18), à laquelle est raccordé l'au moins un organe de liaison (100), la console de montage (74) et un support (60A) se trouvant dans sa zone qui présente un bras de bielle (70) s'étendant radialement et à peu près dans le sens longitudinal du châssis de charrue (16) par rapport à son axe de rotation (62), formant deux organes opposés parallèles l'un à l'autre d'un parallélogramme articulé, dont les deux autre organes (80, 82) parallèles l'un à l'autre relient la console de montage (74) d'une part à l'axe de rotation (62) du support (60A) et d'autre part à l'extrémité éloignée du bras de bielle (70).

11. Charrue réversible semi-portée selon l'une quelconque des revendications précédentes, **caractérisée en ce que** l'angle de pivotement maximal entre le châssis de charrue (16) et l'organe de liaison (40 ; 100) peut être choisi par la possibilité de réglage de la butée ou des butées (44a, 44b ; 110a, 110b).
